(19) **Europäisches Patentamt**

**European Patent Office**

**Office européen des brevets**

(11) **EP 1 691 442 A1**

(12) **EUROPEAN PATENT APPLICATION**
published in accordance with Art. 158(3) EPC

(43) Date of publication:
**16.08.2006 Bulletin 2006/33**

(51) Int Cl.:
**H01M 14/00** *(2006.01)*    **H01L 31/04** *(2006.01)*

(21) Application number: **04791997.2**

(22) Date of filing: **04.10.2004**

(86) International application number:
**PCT/JP2004/014585**

(87) International publication number:
**WO 2005/034276 (14.04.2005 Gazette 2005/15)**

(84) Designated Contracting States:
**DE ES FR IT NL**

(30) Priority: **06.10.2003 JP 2003347538**
**07.11.2003 JP 2003379056**

(71) Applicant: **NGK Spark Plug Co., Ltd.**
**Nagoya-shi,**
**Aichi 467-8525 (JP)**

(72) Inventors:
• **GONDA, Ichiro**
**Nagoya-shi, Aichi 467-8525 (JP)**

• **OKUYAMA, Yasuo**
**Nagoya-shi, Aichi 467-8525 (JP)**
• **FURUSAKI, Keizo**
**Nagoya-shi, Aichi 467-8525 (JP)**

(74) Representative: **Grünecker, Kinkeldey,**
**Stockmair & Schwanhäusser**
**Anwaltssozietät**
**Maximilianstrasse 58**
**80538 München (DE)**

(54) **DYE-SENSITIZED SOLAR CELL**

(57)     A dye-sensitized solar cell according to one aspect of the present invention includes: a first base member having a first substrate provided with a light-transmitting property, a light-transmitting conductive layer formed on a surface of the first substrate and a semiconductor electrode formed on a surface of the light-transmitting conductive layer and containing a sensitizing dye; a second base member having a second substrate and a catalyst layer formed on a surface of the second substrate in such a manner that the catalyst layer faces the semiconductor electrode; an electrolyte layer formed between the semiconductor electrode and the catalyst layer; and either a collector electrode containing tungsten or a pair of collector electrodes, at least one of which contains tungsten, to collect charge from the semiconductor electrode. The dye-sensitized solar cell of this aspect of the present invention not only shows a sufficient photoelectric conversion efficiency but attains excellent durability by prevention of corrector electrode corrosion.

**FIG.1**

**Description**

Technical Field

The present invention relates to a dye-sensitized solar cell for directly converting light energy into electrical energy, in particular, of the type having a collector electrode formed of a material that is highly resistant to corrosion by an electrolyte etc. for improvement in photoelectric conversion efficiency.

Background Art

Solar cells utilizing single-crystal silicon, polycrystalline silicon, amorphous silicon, HIT (Heterojunction with Intrinsic Thin-layer) formed by varying combinations thereof have currently been put to practical use and become major techniques in solar power generation technology. These silicon solar cells show excellent photoelectric conversion efficiencies of nearly 20%, but require high energy costs for material processing and have many problems to be addressed such as environmental burdens and cost and material supply limitations. On the other hand, dye-sensitized solar cells proposed by Gratzel et al. in Japanese Laid-Open Patent Publication No. Hei-01-220380 and Nature (vol. 353, pp. 737-740, 1991) have come to attention as low-priced solar cells. The solar cells of this proposed type are each provided with porous titania electrodes supporting thereon sensitizing dyes, counter electrodes and electrolytic materials interposed between the titania electrodes and the counter electrodes to allow significant reductions in material and processing cost although being lower in photoelectric conversion efficiency than the currently available silicon solar cells.

Herein, the efficient collection of electrons generated by light irradiation in the dye-sensitized solar cell is important for improvement in photoelectric conversion efficiency. The internal resistances of conductive members in the dye-sensitized solar cell need to be lowered on this account. In particular, there arises a problem of internal resistance increase in the light-transmitting conductive layer, which is formed into a very thin film to secure a sufficient light-transmitting property. The lowering of the photoelectric conversion efficiency by such a resistance increase becomes more pronounced as the area of the light-transmitting conductive layer, i.e., the area of the solar cell increases. Various forms of collector electrodes have been thus proposed for efficient electron collections. One type of collector electrode is known to be arranged between a transparent substrate and a transparent conductive film or on a surface of the transparent conductive film in the solar cell in such a manner as to divide the transparent substrate into given regions as disclosed in Japanese Laid-Open Patent Publication No. 2000-231942, so as to decrease an internal resistance of the electrode and increase a photoelectric conversion efficiency of the solar cell. As disclosed in Japanese Laid-Open Patent Publication No. 2000-285977, there is also known a photoelectric conversion element having a transparent conductive substrate and leads of metal such as aluminum, copper or silver (as a collector electrode) arranged on the transparent conductive substrate in a parallel line pattern, a grid pattern or the like with a predetermined line width, thickness and pitch.

In the dye-sensitized solar cell, however, the collector electrode could be subjected to corrosion and separation upon contact with an electrolyte material etc. It is desired that the collector electrode of the dye-sensitized solar cell be provided with a high corrosion resistance while attaining a sufficient photoelectric conversion efficiency.

Disclosure of the Invention

The present invention has been made according to the above circumstances and aims to provide a dye-sensitized solar cell having a collector electrode that is highly resistant to corrosion by an electrolyte etc. so as to prevent collector electrode corrosion while attaining a practically sufficient photoelectric conversion efficiency, in particular, of the type in which the collector electrode is arranged in a predetermined pattern using tungsten-containing metal wire for improvements in photoelectric conversion efficiency and durability.

According to a first aspect of the present invention, there is provided a dye-sensitized solar cell, comprising: a pair of oppositely arranged substrates; a semiconductor electrode, a first collector electrode and a catalyst layer disposed between the substrates, the semiconductor electrode containing a sensitizing dye, the first collector electrode being capable of collecting electrons from the semiconductor electrode; an electrolyte layer retained at least between the semiconductor electrode and the catalyst layer, wherein at least part of at least one of the substrates has a light-transmitting property and the first collector electrode contains tungsten.

According to a second aspect of the present invention, there is provided a dye-sensitized solar cell, comprising: a first base member having a first substrate provided with a light-transmitting property, a light-transmitting conductive layer formed on a surface of the first substrate and a semiconductor electrode formed on a surface of the light-transmitting conductive layer and containing a sensitizing dye; a second base member having a second substrate and a catalyst layer formed on a surface of the second substrate in such a manner that the catalyst layer faces the semiconductor electrode; an electrolyte layer formed between the semiconductor electrode and the catalyst layer; and one of the followings: (A) a first collector electrode formed between the first substrate and the light-transmitting conductive layer, in the light-transmitting conductive layer or on the surface of the light-transmitting conductive layer and containing tungsten; (B) a second collector electrode formed between the second substrate and the catalyst layer and containing tungsten; and (C) first and second collector electrodes, the first collector electrode being formed between the first substrate and the light-transmitting conductive layer, in the light-transmitting conductive layer or on the surface of the light-transmitting conductive layer, the second collector electrode being formed between the second substrate and the catalyst layer, at least one of the first and second collector electrodes containing tungsten.

Brief Description of Drawings

FIG. 1 is a sectional view of a dye-sensitized solar cell according to a first embodiment of the present invention.
FIG. 2 is a plan view of the dye-sensitized solar cell, when viewed from the side of a light-transmitting substrate of a first base member of the solar cell, according to the first embodiment of the present invention.
FIG. 3 is an enlarged schematic view showing a part of a semiconductor electrode, a light-transmitting conductive layer and an electrolyte layer of the dye-sensitized solar cell according to the first embodiment of the present invention.
FIG. 4 is a sectional view of a dye-sensitized solar cell according to one modification of the first embodiment of the present invention.
FIG. 5 is a sectional view of a dye-sensitized solar cell according to another modification of the first embodiment of the present invention.
FIG. 6 is a sectional view of a dye-sensitized solar cell according to a second embodiment of the present invention.
FIG. 7 is a sectional view of a dye-sensitized solar cell according to one modification of the second embodiment of the present invention.
FIG. 8 is a sectional view of a dye-sensitized solar cell according to another modification of the second embodiment of the present invention.
FIG. 9 is a schematic view showing the arrangement of a first collector electrode between a light-transmitting substrate and a light-transmitting conductive layer in the dye-sensitized solar cell.
FIG. 10 is a schematic view showing an alternative example of the arrangement of the first collector electrode of FIG. 9 in the case where the light-transmitting substrate is a glass substrate.
FIG. 11 is a schematic view showing the arrangement of a first collector electrode between a first light-transmitting conductive layer and a second light-transmitting conductive layer in the dye-sensitized solar cell.
FIG. 12 is a schematic view showing an alternative example of the arrangement of the first collector electrode of FIG. 11 in the case where the light-transmitting substrate is a glass substrate.
FIG. 13 is a schematic view showing the arrangement of a first collector electrode in a surface of a light-transmitting conducive layer in the dye-sensitized solar cell.
FIG. 14 is a schematic view showing an alternative example of the arrangement of the first collector electrode of FIG. 13 in the case where the light-transmitting substrate is a glass substrate.
FIG. 15 is a schematic view showing the arrangement of a first collector electrode on a surface of a light-transmitting conductive layer in the dye-sensitized solar cell.
FIG. 16 is a schematic view showing the arrangement of a second collector electrode between a substrate and a catalyst layer in the dye-sensitized solar cell.
FIG. 17 is a schematic view showing an alternative example of the arrangement of the second collector electrode of FIG. 16 in a case where the substrate is a glass substrate.
FIG. 18 is a schematic view showing the arrangement of a second collector electrode between a substrate and a conductive layer in the dye-sensitized solar cell.
FIG. 19 is a schematic view showing an alternative example of the arrangement of the second collector electrode of FIG. 18 in a case where the substrate is a glass substrate.
FIG. 20 is a schematic view showing the arrangement of a second collector electrode between a first conductive layer and a second conductive layer in the dye-sensitized solar cell.
FIG. 21 is a schematic view showing an alternative example of the arrangement of the second collector electrode of FIG. 20 in a case where the substrate is a glass substrate.
FIG. 22 is a schematic view showing the arrangement of a second collector electrode in a surface of a conductive layer in the dye-sensitized solar cell.
FIG. 23 is a schematic view showing alternative example of the arrangement of the second collector electrode of FIG. 22 in a case where the substrate is a glass substrate.
FIG. 24 is a schematic view showing the arrangement of a second collector electrode on a surface of a conductive layer in the dye-sensitized solar cell.

FIG. 25 is a sectional view of a dye-sensitized solar cell according to another embodiment of the present invention.

FIG. 26 is a sectional view of a dye-sensitized solar cell according to still another embodiment of the present invention.

Best Mode for Carrying Out the Invention

Exemplary embodiments of the present invention will be described below in detail with reference to the drawings. It should be herein noted that like parts and portions are designated by like reference numerals in the following description to omit repeated explanations thereof.

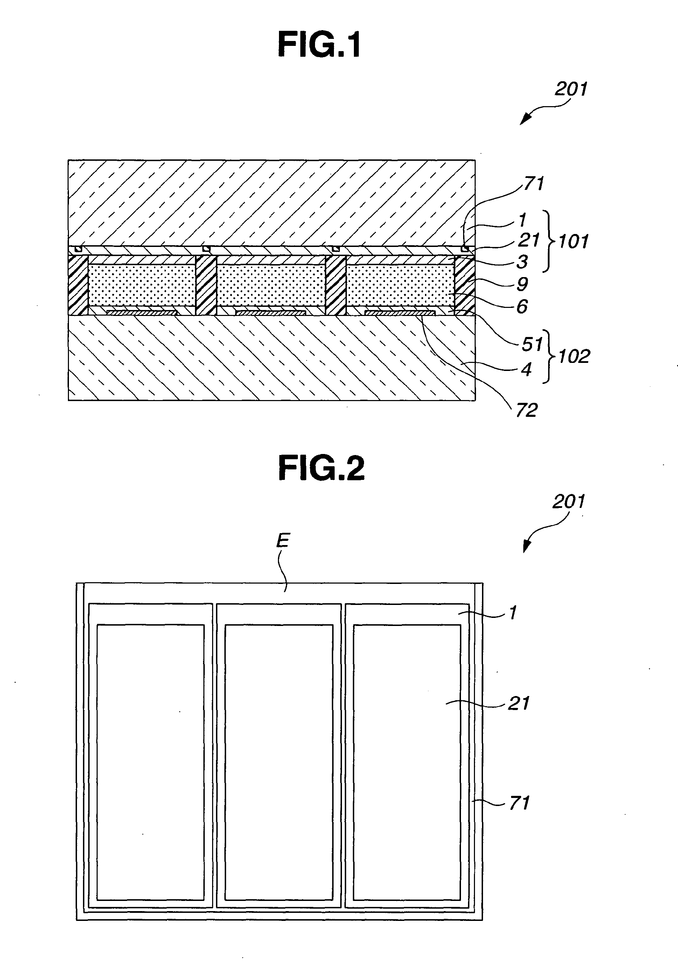

As shown in FIGS. 1 to 3, a dye-sensitized solar cell 201 according to a first embodiment of the present invention has a first base member 101, a second base member 102, an electrolyte layer (electrolytic member) 6, a first collector electrode 71 and a second collector electrode 72. The first base member 101 includes a light-transmitting substrate 1 at least partially provided with a light-transmitting property, a light-transmitting conductive layer 21 formed on a surface of the light-transmitting substrate 1 and a semiconductor electrode 3 formed on a surface of the light-transmitting conductive layer 21 and containing therein a sensitizing dye 31. The second base member 102 includes a substrate 4, a catalyst layer 51 formed on a surface of the substrate 4 and a conductive layer 22 formed between the substrate 4 and the catalyst layer 51. This second base member 102 as a whole may or may not show a light-transmitting property. Namely, each of the substrate 4 and the catalyst layer 51 may or may not have a light-transmitting property. Although the semiconductor electrode 3 can alternatively be provided on a side of the substrate 4, it is desirable in the first embodiment that the semiconductor electrode 3 be provided on a side of the substrate having a light-transmitting property or more excellent light-transmitting property, i.e., on a side of the light-transmitting substrate 1 so as to irradiate a greater amount of light onto the semiconductor electrode 3.

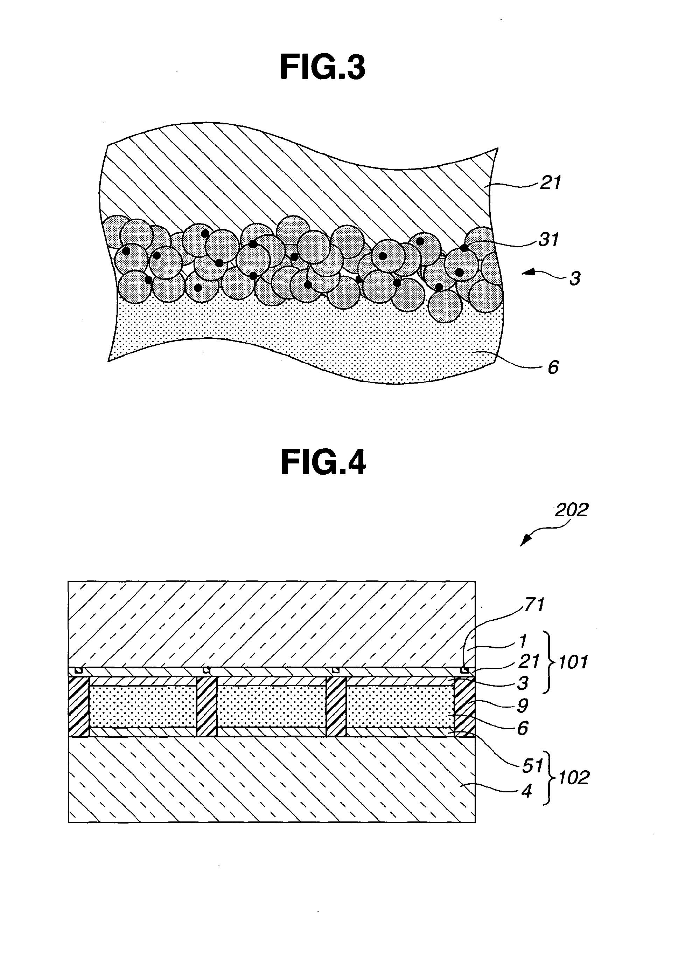

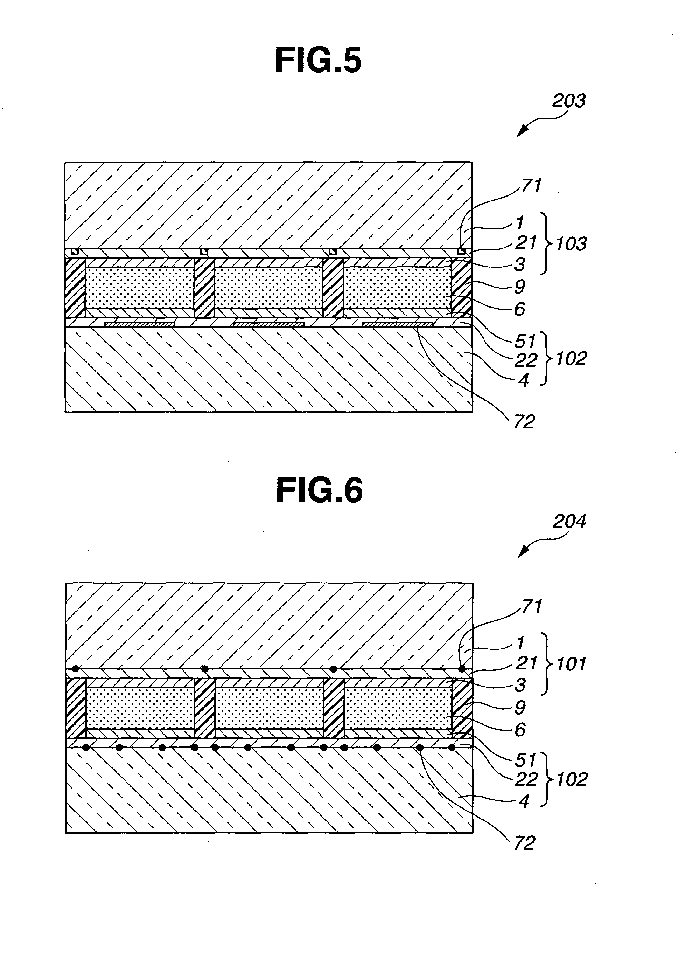

A dye-sensitized solar cell 202 according to one modification of the first embodiment of the present invention is structurally similar to the dye-sensitized solar cell 201 except that the second base member 102 has no second collector electrode 72 as shown in FIG. 4. As shown in FIG. 5, a dye-sensitized solar cell 203 according to another modification of the first embodiment of the present invention is also structurally similar to the dye-sensitized solar cell 201 except that the second base member 102 has a conductive layer 22 and a second collector electrode 72 between the substrate 4 and the conductive layer 22.

As shown in FIG. 6, a dye-sensitized solar cell 204 according to a second embodiment of the present invention has a first base member 101, a second base member 102, an electrolyte layer (electrolyte element) 6, a first collector electrode 71 and a second collector electrode 72. The first base member 101 includes a light-transmitting substrate 1, at least part of which has a light-transmitting property, a light-transmitting conductive layer 21 formed on a surface of the light-transmitting substrate 1 and a semiconductor electrode 3 formed on a surface of the light-transmitting conductive layer 21 and containing therein a sensitizing dye 31 (see FIG. 3). The second base member 102 includes a substrate 4 and a catalyst layer 51 formed on a surface of the substrate 4. This second base member 102 as a whole may or may not show a light-transmitting property. Namely, each of the substrate 4, the catalyst layer 51 and the conductive layer 22 may or may not have a light-transmitting property. Although the semiconductor electrode 3 can alternatively be provided on a side of the substrate 4, it is desirable that the semiconductor electrode 3 be provided on a side of the substrate having a light-transmitting property or more excellent light-transmitting property, i.e., on a side of the light-transmitting substrate 1 so as to irradiate a greater amount of light onto the semiconductor electrode 3 in the second embodiment.

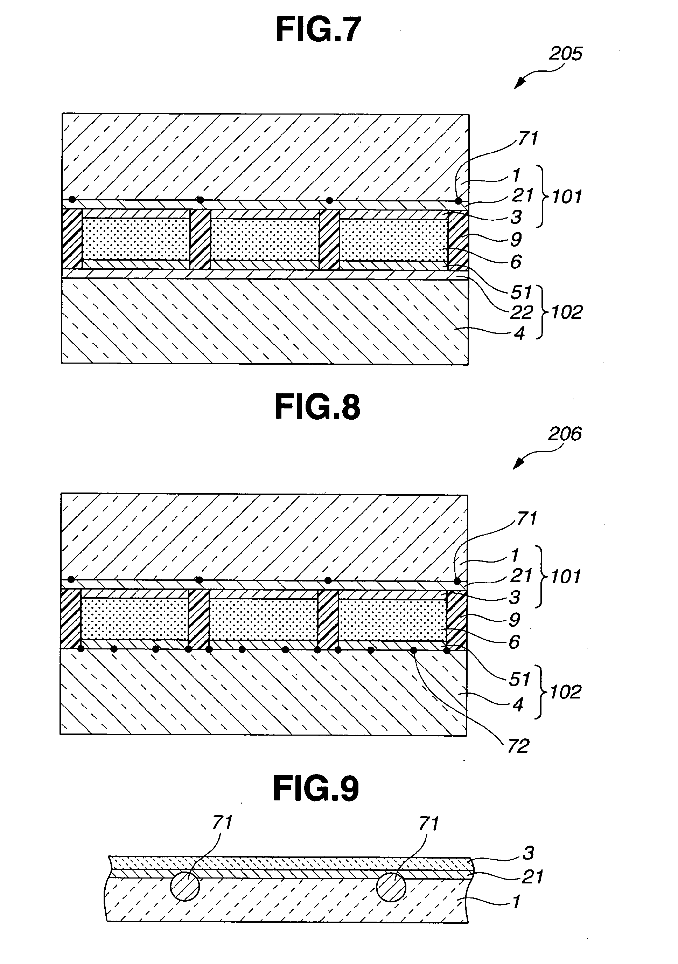

A dye-sensitized solar cell 205 according to one modification of the second embodiment of the present invention is structurally similar to the dye-sensitized solar cell 204 except that the second base member 102 has no second collector electrode 72 as shown in FIG. 7. As shown in FIG. 8, a dye-sensitized solar cell 206 according to another modification of the second embodiment of the present invention is also structurally similar to the dye-sensitized solar cell 204 except that the second base member 102 has no conductive layer 22.

In each of the dye-sensitized solar cells 201 to 206 of the present invention, the light-transmitting property means that the transmissivity of visible light having a wavelength of 400 to 900 nm is 10% or higher. The transmissivity is preferably in a range of 60% or higher, more preferably 85% or higher. The meaning of the light-transmitting property and the desirable range of the transmissivity are hereinafter the same throughout the description.

$$\text{Transmissivity (\%)} = (\text{the amount of transmitted light / the amount of incident light}) \times 100$$

The light-transmitting substrate 1 is capable of functioning as a solar cell substrate when at least part of the substrate 1 has a light-transmitting property. In order to obtain an improvement in photoelectric conversion efficiency, however, it is desirable to impart the light-transmitting property to a large planar portion e.g. 30% or more, especially 50% or more, more especially 70% or more, with respect to the total area of the substrate 1. The light-transmitting property is more desirably imparted to the whole area of the substrate 1.

As the light-transmitting substrate 1, there may be used a substrate of glass, resin sheet or the like. The resin sheet is not particularly restricted. Examples of the resin sheet include sheets of polyesters such as polyethylene terephthalates and polyethylene naphthalates and other sheets of polyphenylene sulfides, polycarbonates, polysulfones and polyethylidene norbornenes.

The light-transmitting substrate 1 varies in thickness depending on the material thereof. The thickness of the light-transmitting substrate 1 is not particularly restricted but is desirably of such a thickness that the above-defined transmissivity ranges from 60 to 99%, especially from 85 to 99%.

The light-transmitting conductive layer 21 is not particularly restricted as long as it has light-transmitting and conducting properties. As the light-transmitting conductive layer 21, there may be used a thin film of conductive oxide, a carbon thin film or the like. Examples of the conductive oxide include tin oxide, fluorine-doped tin oxide (FTO), indium oxide, tin-doped indium oxide (ITO) and zinc oxide.

The light-transmitting conductive layer 21 varies in thickness depending on the material thereof. The thickness of the light-transmitting conductive layer 21 is not particularly restricted but is desirably of such a thickness that the layer 21 shows a surface resistively of 100 $\Omega/cm^2$ or lower, especially 1 to 10 $\Omega/cm^2$.

The preparation method of the light-transmitting conductive layer 21 is not particularly restricted. The light-transmitting conductive layer 21 can be prepared, for example, through the application of a paste containing fine particles of metal or conductive oxide to the surface of the light-transmitting substrate 1. The paste application process is exemplified by various process techniques such as a doctor blade process, a squeegee process and a spin coat process. Alternatively, the light-transmitting conductive layer 21 may be prepared by a sputtering, vapor deposition or ion plating process using a metal or conductive oxide material.

As the sensitizing dye 31, there may be used a complex dye or an organic dye for improved photoelectric conversion. Examples of the complex dye include metal complex dyes. Examples of the organic dye include polymethine dyes and merocyanine dyes. Specific examples of the metal complex dyes include ruthenium complex dyes and osmium complex dyes. Among others, especially preferred are ruthenium complex dyes. In order to extend the photoelectric conversion wavelength range of the sensitizing dye and thereby obtain an improvement in photoelectric conversion efficiency, two or more kinds of sensitizing dye compounds having different photoelectric conversion wavelength ranges can be used in combination. In this case, it is desirable to select the kinds and quantity ratio of the sensitizing dye compounds to be used in combination according to the wavelength range and intensity distribution of light irradiated onto the sensitizing dye compounds. Further, the sensitizing dye preferably includes a functional group for bonding to the semiconductor electrode 3. Examples of the functional group include a carboxyl group, a sulfonic group and a cyano group.

An electrode body of the semiconductor electrode 3 can be made of a metal oxide material, a metal sulfide material or the like. Examples of the metal oxide material include titania, tin oxide, zinc oxide and niobium oxide such as niobium pentoxide, tantalum oxide and zirconia. As the metal oxide material, there may also be used double oxide such as strontium titanate, calcium titanate and barium titanate. Examples of the metal sulfide material include zinc sulfide, lead sulfide and bismuth sulfide.

The preparation method of the electrode body of the semiconductor electrode 3 is not particularly restricted. The electrode body of the semiconductor electrode 3 can be prepared by, for example, applying a paste containing fine particles of metal oxide or metal sulfide to the surface of the light-transmitting conductive layer 21, and then, sintering the paste. The paste application process is not also particularly restricted and is exemplified by a screen printing process, a doctor blade process, a squeegee process, a spin coat process and the like. The thus-prepared electrode body is in the form of an aggregate in which the fine particles are agglomerated. Alternatively, the electrode body of the semiconductor electrode 3 may be prepared by applying a colloid in which fine particles of metal oxide or metal sulfide are dispersed together with a small quantity of organic polymer to the surface of the light-transmitting conductive layer 21, drying the colloid and removing the organic polymer by heat decomposition. The colloid can be applied by any process technique such as a screen printing process, a doctor blade process, a squeegee process or a spin coat process. The thus-prepared electrode body is also in the form of an aggregate in which the fine particles are agglomerated.

The thickness of the semiconductor electrode 3 is not particularly restricted and can be adjusted to 0.1 to 100 $\mu$m. It is desirable that the thickness of the semiconductor electrode 3 ranges from 1 to 50 $\mu$m, especially 2 to 40 $\mu$m, more specifically 5 to 30 $\mu$m. When the thickness of the semiconductor electrode 3 is in the range of 0.1 to 100 $\mu$m, it is possible to achieve adequate photoelectric conversion for improved power generation efficiency.

Further, the semiconductor electrode 3 is desirably subjected to heat treatment in order to increase the strength of the semiconductor electrode 3 and the adhesion of the semiconductor electrode 3 with the light-transmitting conductive layer 21. The temperature and time of the heat treatment are not particularly restricted. It is desirable to control the heat treatment temperature to within 40 to 700°C, especially 100 to 500°C, and to control the heat treatment time to within 10 minutes to 10 hours, especially 20 minutes to 5 hours. In the case of using a resin sheet as the light-transmitting substrate 1, it is desirable that the heat treatment is performed at low temperatures so as not to cause a thermal degradation of the resin sheet.

The method of adhering the sensitizing dye 31 to the electrode body of the semiconductor electrode 3 is not particularly restricted. The sensitizing dye 31 can be adhered to the electrode body of the semiconductor electrode 3 by, for example, immersing the electrode body into a solution in which the sensitizing dye 31 dissolved with an organic solvent, impregnating the electrode body with the solution, and then, removing the organic solvent. Alternatively, the sensitizing dye 31 may be adhered to the electrode body of the semiconductor electrode 3 by applying a solution in which the sensitizing dye 31 is dissolved with an organic solvent to the electrode body, and then, removing the organic solvent. The solution application process is herein exemplified by a wire bar process, a slide hopper process, an extrusion process, a curtain coating process, a spin coat process, a spray coat process and the like. The solution can alternatively be applied by a printing process such as an offset printing process, a gravure printing process or a screen printing process.

The adhesion amount of the sensitizing dye 31 preferably ranges from 0.01 to 1 mmol, especially 0.5 to 1 mmol, per 1g of the electrode body. When the adhesion amount of the sensitizing dye 31 is in the range of 0.01 to 1 mmol, the semiconductor electrode 3 allows sufficient photoelectric conversion. If some of the sensitizing dye 31 exists free around the electrode without being adhered to the electrode body, the efficiency of photoelectric conversion in the semiconductor electrode 3 may be lowered. It is thus desirable to remove excessive sensitizing dye by washing the semiconductor electrode 3 after the process of adhering the sensitizing dye 31 to the electrode body. The removal of the excessive sensitizing dye can be performed by washing with an organic solvent such as a polar solvent e.g. acetonitrile or an alcohol solvent through the use of a washing bath. In order to adhere a great amount of sensitizing dye to the electrode body, the electrode body is preferably subjected to heating before the impregnation or application process. In this case, it is further preferred that the impregnation or application process is performed at temperatures of 40 to 80°C immediately after the heat treatment and before the electrode body reaches an ambient temperature, in order to avoid water from being adsorbed onto a surface of the electrode body.

The substrate 4 may or may not have a light-transmitting property as already mentioned above.

A substrate of glass, resin sheet or the like are usable as the substrate 4 having a light-transmitting property as is the case with the light-transmitting substrate 1. The substrate 4, when being of resin sheet, can be made from any thermoplastic resin such as polyesters, polyphenylene sulfides, polycarbonates, polysulfones and polyethylidene norbornenes in the same manner as the light-transmitting substrate 1. In the case of the substrate 4 having a light-transmitting property, the substrate 4 varies in thickness depending on the material thereof. The thickness of the substrate 4 is not particularly restricted and is desirably is of such a thickness that the above-defined transmissivity ranges from 60 to 99%, especially from 85 to 99%.

A ceramic substrate is usable as the substrate 4 having no light-transmitting property. The ceramic substrate is so high in strength as to function as a supporting substrate and provide the dye-sensitized solar cell with excellent durability. A ceramic material for the ceramic substrate is not particularly restricted. Various ceramic materials such as oxide ceramic, nitride ceramic and carbide ceramic can be used. Examples of the oxide ceramic include alumina, mullite and zirconia. Examples of the nitride ceramic include silicon nitride, sialon, titanium nitride and aluminum nitride. Examples of the carbide ceramic include silicon carbide, titanium carbide and aluminum carbide. As the ceramic material, preferred are aluminum, silicon nitride and zirconia. Alumina is especially preferred. In the case of the substrate 4 being of ceramic, the thickness of the substrate 4 is not particularly restricted and can be adjusted to 100 $\mu$m to 5 mm, especially 500 $\mu$m to 5 mm, more especially 800 $\mu$m to 5 mm, still more especially 800 $\mu$m to 20 mm. When the thickness of the ceramic substrate is in the range of 100 $\mu$m to 5 mm, desirably 800 $\mu$m to 5 mm, the ceramic substrate has high strength and functions as a supporting layer to provide the dye-sensitized solar cell with excellent durability.

The catalyst layer 51 can be made of either a catalytically active material or at least one of metals and conductive oxides and resins usable for preparation of the light-transmitting conductive layer 21 containing therein a catalytically active material. Examples of the catalytically active material include noble metals such as platinum and rhodium and carbon black. These substances also have conducting properties. (Silver is not suitable for use in the catalyst layer 51 due to its low resistance to corrosion by an electrolyte etc. For the same reason, silver is not suitable for use in any portion that may come into contact with an electrolyte etc.) It is preferred that the catalyst layer 51 is made of noble metal having catalytic activity and electrochemical stability. Especially preferred is platinum, which has high catalytic activity and is less prone to being dissolved by an electrolytic solution.

In the case of using any of the metals, conductive oxides and conductive resins showing no catalytic activity, the metals usable in the catalyst layer 51 are exemplified by aluminum, copper, chrome, nickel and tungsten and the conductive resins usable in the catalyst layer 51 are exemplified by polyaniline, polypyrrole and polyacethylene. Further, the conductive resins are exemplified by a resin composition prepared by mixing a conductive material or materials into a resin material. The resin material is not particularly restricted and can be either a thermoplastic resin or a thermosetting resin. Examples of the thermoplastic resin include thermoplastic polyester resins, polyamide resins, polyolefin resins and polyvinyl chloride resins. Examples of the thermosetting resin include epoxy resins, thermosetting polyester resins and phenol resins. The conductive material or materials are not also particularly restricted. Examples of the conductive material or materials include carbon black, metals such as copper, aluminum, nickel, chromium and tungsten and conductive polymers such as polyaniline, polypyrrole and polyacethylene. As the conductive material or materials, especially preferred are noble metal and carbon black each having conductive properties and catalytic activities. These conductive materials can be used solely or in combination thereof.

In the case of using any of the metals, conductive oxides and conductive resins showing no catalytic activity, it is desirable that the catalytically active material is contained in an amount of 1 to 99 parts by mass, especially 50 to 99 parts by mass, per 100 parts by mass of the catalytically inactive metal, conductive oxide and/or conductive resin material.

In this way, the catalyst layer 51 can be prepared from either the catalytically active and electrically conductive material or at least one of the metals, the conductive oxides and the conductive resins containing the catalytically active material. The catalyst layer 51 may be a layer of one kind of material or a mixed layer of two or more kinds of materials. Further, the catalyst layer 51 may have a single layer structure or a multilayer structure including more than one of metal layers, conductive oxide layers, conductive resin layers and mixed layers of two or more of metals, conductive oxides and conductive resins.

The thickness of the catalyst layer 51 is not particularly restricted and can be adjusted to 3 nm to 10 $\mu$m, especially 3 nm to 2 $\mu$m, in either of the cases where the catalyst layer 51 has a single layer structure and where the catalyst layer 52 has a multilayer structure. When the thickness of the catalyst layer 51 is in the range of 3 nm to 10 $\mu$m, the catalyst layer 51 becomes sufficiently low in resistance.

In the case of the catalyst layer 51 being made from the catalytically active material, the catalyst layer 51 can be prepared through the application of a paste containing fine particles of catalytically active material to the surface of the substrate 4 or, when the conductive layer 22 is provided as described below, to the surface of the conductive layer 22. In the case of the catalyst layer 51 being made from any of the metals and conductive oxides containing the catalytically active material, the catalyst layer 51 can be prepared in the same manner as is the case of the catalyst layer 51 being made of the catalytically active material. The paste application method is exemplified by various process techniques such as a doctor blade process, a squeegee process and a spin coat process. Alternatively, the catalyst layer 51 may be prepared through the deposition of metal or the like to the surface of the substrate 4 by a sputtering process, a vapor deposition process, an ion plating process or the like. In the case of the catalyst layer 51 being made of the conductive resin containing the catalytically active material, the catalyst layer 51 can be prepared by kneading the resin with both the catalytically active material and the conductive material in powdery or fibrous form through the use of a kneading device such as a Banbury mixer, an internal mixer or an open roll, molding the thus-kneaded substance into a film, and then, bonding the film to the surface of the substrate 4. The catalyst layer 51 may alternatively be prepared by dissolving or dispersing the resin composition into a solvent, applying the thus-obtained solution or dispersoid to the surface of the substrate 4, drying to remove the solvent, and then, heating as required. The catalyst layer 51, when being a mixed layer, is prepared by any of the above catalyst layer preparation methods according to the kinds of the material contents thereof.

The conductive layer 22 may be provided between the substrate 4 and the catalyst layer 51 in the second base body 102.

The conductive layer 22 may or may not have a light-transmitting property and can be made of the same material as that of the light-transmitting conductive layer 21.

The thickness of the conductive layer 22 is not particularly restricted due to the fact that the conductive layer 22 does not necessarily have a light-transmitting property. In view of the cost, however, the conductive layer 22 is preferably in the form of a thin film. The conductive layer 22, when formed into a thin film, attains a light-transmitting property but becomes high in internal resistance. It is thus desirable to adjust the thickness of the conductive layer 22 in consideration of the light-transmitting property and internal resistance. Normally, the thickness of the conductive layer 22 can be adjusted in such a manner that the layer 22 shows a surface resistivity of 100 $\Omega$/cm$^2$ or lower, especially 1 to 10 $\Omega$/cm$^2$.

The preparation method of the conductive layer 22 is not also particularly restricted. The conductive layer 22 can be prepared, for example, through the application of a paste containing fine particles of metal or conductive oxide to the surface of the substrate 4. The paste application process is exemplified by various process techniques such as a doctor blade process, a squeegee process and a spin coat process. Alternatively, the conductive layer 22 may be prepared through the deposition of metal or the like onto the surface of the substrate 4 by a sputtering, vapor deposition, ion plating process or the like.

Each of the dye-sensitized solar cells 201-206 has at least one of the first collector electrode 71 of the first base member 101 and the second collector electrode 72 of the second base member 102. In the case of either one of the first collector electrode 71 and the second collector electrode 72 being provided, the collector electrode 71 contains therein tungsten. In the case of both of the first collector electrode 71 and the second collector electrode 72 being provided, each or either one of these collector electrodes contains therein tungsten. Although the electrolyte layer 6 contains a highly corrosive electrolyte etc. in each of the dye-sensitized solar cells 201-206, the corrosion of the collector electrode 71, 72 can be prevented by the use of tungsten highly resistant to corrosion by such an electrolyte etc. This results in improved solar cell durability. Preferably, the first collector electrode 71 is arranged in the first base member 101 where the semiconductor electrode 3 is provided, so as to efficiently collect electrons generated at the semiconductor electrode 3 by means of the first collector electrode 71 for improvement in photoelectric conversion efficiency.

The tungsten-containing first collector electrode 71 and/or second collector electrode 72 can be made of pure tungsten or a mixture of tungsten and another metal. (The pure tungsten means that tungsten greater than 99.98% pure is used as it is without mixing another metal.) Among others, pure tungsten is preferred due to its high resistance to corrosion by the electrolyte of the electrolyte layer 6. As metals other than tungsten, nickel, titanium and noble metal having high corrosion resistance are suitably used. In the case of using tungsten and another metal in combination, tungsten can be contained in an amount of 95% by mass or more, specifically 98% by mass or more, more especially 99.9% by mass or more, with the proviso that the total amount of tungsten and amount metal is determined as 100% by mass. (The tungsten amount may be 100% by mass. Herein, 100 mass% tungsten means that tungsten greater than 99.98% pure is used as it is without mixing another metal.) When the tungsten amount is 95% by mass or more, it is possible to attain high charge collection efficiency, high resistance to corrosion by the electrolyte of the electrolyte layer 6 and sufficient durability for each of the dye-sensitized solar cells 201-206.

The first collector electrode 71 is arranged between the light-transmitting substrate 1 and the light-transmitting conductive layer 21, in the light-transmitting conductive layer 21 or on a surface of the light-transmitting conductive layer 21. Namely, the first collector electrode 71 is in contact with the semiconductor electrode 3 or is adjacent to the semiconductor electrode 3 via the light-transmitting conductive layer 21.

The form of the first collector electrode 71 is not particularly restricted. The first collector electrode 71 can be provided in such a manner as to surround the semiconductor electrode 3 or divide the semiconductor electrode 3 into given regions. When the first collector electrode 71 is arranged to divide the semiconductor electrode 3 into the given regions, there are not only a case where the first collector electrode 71 is made entirely continuous but also a case where the first collector electrode 71 is partially discontinued. For example, the planar form of the first collector electrode 71 can be in a grid pattern, a comb pattern, a radial pattern or the like.

The width and thickness of the first collector electrode 71 are not particularly restricted and can be set as appropriate in view of the electrical resistance, cost and the like. In the case where the first collector electrode 71 is in planar form having a grid pattern, a comb pattern, a radial pattern or the like, it is desirable that the total area of the first collector electrode 71 ranges from 0.1 to 20%, especially 0.1 to 5%, more especially 0.1 to 1%, with respect to the total area of the semiconductor electrode 3. When the total area of the first collector electrode 71 is in the range of 0.1 to 20% with respect to the total area of the semiconductor electrode 3, it is possible to obtain an improvement in charge collection efficiency and allow a sufficient amount of light to be irradiated on the semiconductor electrode 3.

The second collector electrode 72 is arranged between the substrate 4 and the catalyst layer 51, between the substrate 4 and the conductive layer 22, in the conductive layer 22 or on a surface of the conductive layer 22. Namely, the second collector electrode 72 is in contact with the catalyst layer 51 or is adjacent to the catalyst layer 51 via the conductive layer 22.

In view of the conductivity, the second collector electrode 72 is not necessarily provided when the catalyst layer 51 and the conductive layer 22 are made of noble metal such as platinum having an excellent conducting property, in particular, with a sufficient thickness of 20 nm or larger, especially 1 $\mu$m or larger (normally 10$\mu$ m or smaller). In view of the cost, however, the second collector electrode 72 is desirably provided. Although the catalyst layer 51 and the conductive layer 22 are preferably formed into thin films due to the fact that platinum is expensive, the thin-film layer 51, 22 becomes high in resistance. The arrangement of the second collector electrode 72 allows an improvement in charge collection efficiency and a reduction in cost even in such a case. When catalyst layer 51 is prepared from the mixed composition of the catalytically active material and the conductive oxide and when the conductive layer 22 is prepared from the conductive oxide, the catalyst layer 51 and the conductive layer 22 become further high in resistance. In either case, the second collector electrode 72 is preferably provided for improvement in charge collection efficiency. The material of the second collector electrode 72 is not particularly restricted in the case where the first collector electrode 71 containing tungsten is provided. Nickel and other metals are usable as the material of the second collector electrode 72. Preferably, the second collector electrode 72 is also made of tungsten or tungsten-containing metal material that is high in conductivity and corrosion resistance and low in cost. When the second collector electrode 72 contains tungsten, the corrosion of the second collector electrode 72 can be prevented. This results in improved cell durability. It should be noted that the reference made to the second collector electrode 72 in this section is applicable to the case of the second collector electrode 72 being formed of a metal wire as described later.

The planar form of the second collector electrode 72 is not also particularly restricted. The second collector electrode 72 can be arranged in sheet form since the light-transmitting property is not an essential condition for the second base member 102. Alternatively, the second collector electrode 72 may be arranged in such a manner as to divide the catalyst layer 51 or the conductive layer 22 into given regions. In order for the second collector electrode 72 to be low in resistance, it is desirable that the second collector electrode 72 is similar in planar form to the catalyst layer 51 or the like and has large an area as 50% or more, especially 65% or more, more especially 80% or more (including the same size), of the catalyst layer 51 or the like. It is further desirable that the second collector electrode 72 is similar in figure to the catalyst layer 51 or the like. The form of the second collector electrode 72 can be in a grid pattern, a comb pattern, a radial pattern etc. such that the second collector electrode 72 is arranged to divide the catalyst layer 51 or the like into the given regions. When the second collector electrode 72 is arranged to divide the catalyst layer 51 or the like into the given regions, there are not only a case where the second collector electrode 72 is made entirely continuous but also a case where the second collector electrode 72 is partially discontinued. The width (if not in sheet form) and thickness of the second collector electrode 72 are not particularly restricted and can be set as appropriate in view of the electrical resistance, cost and the like. When the second collector electrode 72 is in planar form having a grid pattern, a comb pattern, a radial pattern or the like, the total area of the second collector electrode 72 is not particularly restricted and can be set to 0.1% or more, especially 5% or more, with respect to the total area of the semiconductor electrode 3. The total area of the second collector electrode 72 may be set to 90% or more, more especially 100%, with respect to the total area of the catalyst layer 51. The arrangement of such a second collector electrode 72 allows a further improvement in charge collection efficiency.

The preparation method of the first collector electrode 71 and the second collector electrode 72 is not particularly restricted. The first collector electrode 71 and the second collector electrode 72 can be prepared by, for example, depositing tungsten, or tungsten and another metal, by a physical vapor deposition process such as a magnetron sputtering or an electron-beam vapor deposition using a mask of predetermined pattern, and then, patterning the deposit by a photolithographic process. Alternatively, each of the first collector electrode 71 and the second collector electrode 72 may be prepared by patterning a paste containing a tungsten component such as tungsten particles by a screen printing process etc. and sintering the paste. Examples of the metal other than tungsten suitably usable in vapor phase deposition include nickel, titanium, noble metal such as platinum and gold and copper. Among others, nickel, titanium and noble metal having high corrosion resistance are preferred as the metal other than tungsten usable in vapor phase deposition. Examples of the metal other than tungsten mixable in the paste also include nickel, titanium, noble metal such as platinum and gold and copper. Nickel, titanium and noble metal having high corrosion resistance are preferred as the metal other than tungsten mixable in the paste.

In the case of using tungsten together with another metal, tungsten can be contained in an amount of 95% by mass or more, especially 98% by mass or more, more especially 99.9% by mass or more, with the proviso that the total amount of tungsten and another metal is determined as 100% by mass. (The tungsten amount may be 100% by mass. Herein, 100 mass% tungsten means that tungsten greater than 99.98% pure is used as it is without mixing another metal.) When the tungsten amount is 95% by mass or more, it is possible to attain a high charge collection efficiency, high resistance to corrosion by the electrolyte of the electrolyte layer and sufficient durability for the dye-sensitized solar cell.

At least either one of the first collector electrode 71 and the second collector electrode 72 can be formed of a tungsten-containing metal wire. In this case, a wire of pure tungsten (i.e. tungsten greater than 99.98% pure without another metal being mixed) or a mixture of tungsten and another metal is usable as the tungsten-containing metal wire. Among others, a collector electrode of pure tungsten wire is preferred due to its particularly high resistance to corrosion by the electrolyte of the electrolyte layer.

In the case of using the metal wire made of the mixture of tungsten and another metal, the metal used together with tungsten is not particularly restricted. Preferred is metal having high resistance to corrosion by an electrolyte etc. Examples of such metal include nickel, titanium and noble metal e.g. platinum and gold. In this case, tungsten is preferably contained in an amount of 95% by mass or more, especially 98% by mass or more, more especially 99.9% by mass or more, with the proviso that the total amount of tungsten and other metal is determined as 100% by mass. (The tungsten amount may be 100% by mass. Herein, 100 mass% tungsten means that tungsten greater than 99.98% pure is used as it is without mixing another metal.) When the tungsten amount is 95% by mass or more, the collector electrode is able to attain high resistance to corrosion by the electrolyte etc.

The radial cross sectional profile of the metal wire is not particularly restricted. The metal wire may be circular, oval or polygonal e.g. triangular or quadrilateral in cross section. The radial dimension of the metal wire (i.e. the diameter of the metal wire when the metal wire is circular in cross section and, when the metal wire has another shape of cross section, the maximum dimension of the metal wire) is not also particularly restricted and can be adjusted to 1 to 100 $\mu$m, especially 10 to 50 $\mu$m, more especially 20 to 30 $\mu$m. When the radial dimension of the metal wire is in the range of 1 to 100 $\mu$m, in particular, 5 to 100 $\mu$m, the collector electrode is able to function properly and there does not arise any workability problem at the occasion of collector electrode arrangement. In the case of the collector electrode being made of metal wire, it is desirable to arrange the metal wire, without causing a particularly low wire density section, so as to collect electrons efficiently from the whole area of the semiconductor electrode or the catalyst layer. In the first base member 101 where the light-transmitting property is essential, it is possible to allow a sufficient amount of light to be irradiated on the semiconductor electrode 3 by avoiding the wire density from becoming too high.

The first collector electrode 71, when being of metal wire, can be arranged around the semiconductor electrode 3 or arranged to divide the semiconductor electrode 3 into given regions. When the first collector electrode 71 is arranged to divide the semiconductor electrode 3 into the given regions, there are not only a case where the first collector electrode 71 is made entirely continuous but also a case where the first collector electrode 71 is partially discontinued. For example, the planar form of the first collector electrode 71 can be in a grid pattern, a comb pattern, a radial pattern or the like. In the case where the first collector electrode 71 is in planar form having a grid pattern, a comb pattern, a radial pattern or the like, it is desirable that the total area of the first collector electrode 71 (i.e. the total area of a maximum dimensional portion of the metal wire in a direction orthogonal to the direction of light irradiation) ranges from 0.1 to 20%, especially 0.1 to 5%, more especially 0.1 to 1%, with respect to the total area of the semiconductor electrode 3. When the total area of the first collector electrode 71 is in the range of, in particular, 0.1 to 1% with respect to the total area of the semiconductor electrode 3, it is possible to obtain an improvement in charge collection efficiency and allow a sufficient amount of light to be irradiated on the semiconductor electrode 3.

The arrangement pattern of the second collector electrode 72 is not particularly restricted because there is no need to give consideration to the light-transmitting property. The second collector electrode 72, when being of metal wire, can be similar in form to the first collector electrode 71. Namely, the second collector electrode 72 can be arranged to surround a projected image of the semiconductor electrode 3 on the surface of the substrate 4 or the catalyst layer 51. The second collector electrode 72 may alternatively be arranged to divide the catalyst layer 51 or the conductive layer 22 into given regions. In this case, the second collector electrode 72 can be in a grid pattern, a comb pattern, a radial pattern or the like as in the case of the first collector electrode 71. The total area of the second collector electrode 72 (i.e. the total area of a maximum dimensional portion of the metal wire in a direction orthogonal to the direction of light irradiation) is not particularly restricted and can be set to 0.1 % or more, especially 5% or more, with respect to the total area of the catalyst layer 51 or the like. The total area of the second collector electrode 72 may be set to 90% or more, especially 100%, with respect to the total area of the catalyst layer 51 or the like due to the fact that the second base member 102 as a whole does not necessarily show a light-transmitting property. The use of such a densely arranged collector electrode allows a further improvement in charge collection efficiency.

More specifically, the first collector electrode 71 may be arranged between the light-transmitting substrate 1 and the light-transmitting conductive layer 21 with one part of the electrode 71 being embedded in the light-transmitting substrate 1 and the other part of the electrode 71 being held in contact with the light-transmitting conductive layer 21 as shown in FIG. 9. The proportion of the metal wire embedded in the light-transmitting substrate 1 (i.e. the percentage ratio of the cross sectional area of the embedded part of the metal wire to the total cross sectional area of the metal wire) is not particularly restricted but can be set to 50 to 90%, especially 60 to 90%, more especially 65 to 80%. When this proportion is in the range of 50 to 90%, it is possible to support the first collector electrode 71 by the light-transmitting substrate 1 properly and connect the first collector electrode 71 to the light-transmitting conductive layer 21 assuredly for improvement in charge collection efficiency.

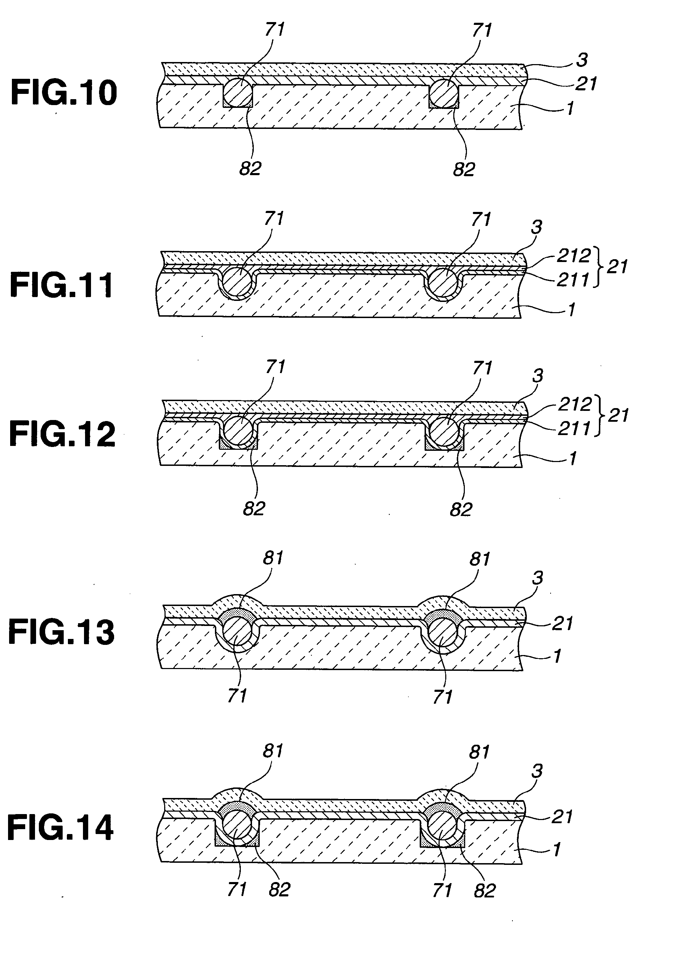

In this case, the arrangement method of the first collector electrode 71 is not particularly restricted. When the substrate is a resin substrate, the first collector electrode 71 can be arranged as shown in FIG. 9 by placing some pieces of metal wire in a forming die, forming the substrate by the use of this forming die to embed one part of the metal wire in the substrate, applying the light-transmitting conductive layer 21 to a surface of the substrate at which the other part of the metal wire is exposed, and then, applying the semiconductor electrode 3 to a surface of the light-transmitting conductive layer 21. The first collector electrode 71 may alternatively be arranged as shown in FIG. 9 by preparing a resin substrate of predetermined form, placing some pieces of metal wire on a surface of the resin substrate, heating and pressing the metal wire to embed one part of the metal wire in the substrate, applying the light-transmitting conductive layer 21 to a surface of the substrate at which the other part of the metal wire is exposed, and then, applying the semiconductor electrode 3 to a surface of the light-transmitting conductive layer 21. When the substrate is a glass substrate, the first collector electrode 71 can be arranged as shown in FIG. 10 by forming collector electrode installation grooves, each of which is polygonal e.g. triangular or quadrilateral or semicircular in cross section, in a surface of the substrate, placing some pieces of metal wire in the respective grooves, applying the light-transmitting conductive layer 21 to a surface of the substrate at which the other part of the metal wire is exposed, and then, applying the semiconductor electrode 3 to a surface of the light-transmitting conductive layer 21. Herein, it is not desirable to leave some space between the glass substrate and the metal wire. An adhesive is thus preferably filled into the space between the glass substrate and the metal wire so as to join the glass substrate and the metal wire by an adhesive layer 82. This adhesive layer 82 can be formed of the same adhesive as the after-mentioned adhesive layer 81.

As shown in FIG. 11, the first collector electrode 71 may be arranged between a first light-transmitting conductive layer portion 211 and a second light-transmitting conductive layer portion 212 with one part of the electrode 71 being embedded in the light-transmitting substrate 1 and the first light-transmitting conductive layer portion 211 and the other part of the electrode 71 being held in contact with the second light-transmitting conductive layer portion 212. The proportion of the metal wire embedded in the light-transmitting substrate 1 and the first light-transmitting conductive layer portion 211 is not particularly restricted and can be set to 50 to 90%, especially 60 to 90%, more especially 65 to 80%. When this proportion is in the range of 50 to 90%, it is possible to support the first collector electrode 71 by the light-transmitting substrate 1 and the first light-transmitting conductive layer portion 211 properly. It is further possible in this configuration to connect the metal wire to the light-transmitting conductive layer 21 assuredly for improvement in charge collection efficiency by embedding the metal wire in the light-transmitting conductive layer 21.

When the substrate is a resin substrate in this case, the first collector electrode 71 can be arranged as shown in FIG. 11 by placing some pieces of metal wire in a forming die, forming the first light-transmitting conductive layer 211 applied to the light-transmitting substrate 1 upon contact with the metal wire, thereby embedding one part of the metal wire in the light-transmitting substrate 1 and the first light-transmitting conductive layer 211, applying the second light-transmitting conductive layer 212 to a surface of the conductive layer 211 at which the other part of the metal wire is exposed, and then, applying the semiconductor electrode 3 to a surface of the second light-transmitting conductive layer 212. The first collector electrode 71 may alternatively be arranged as shown in FIG. 11 by placing some pieces of metal wire on a surface of the first light-transmitting conductive layer 211 applied to the light-transmitting substrate 1, heating and pressing the metal wire to embed one part of the metal wire in the light-transmitting substrate 1 and the first light-transmitting conductive layer 211, applying the second light-transmitting conductive layer 212 to a surface of the conductive layer 211 at which the other part of the metal wire is exposed, and then, applying the semiconductor electrode 3 to a surface of the second light-transmitting conductive layer 212. When the substrate is a glass substrate, the first collector electrode 71 can be arranged as shown in FIG. 12 by forming collector electrode installation grooves, each of which is polygonal e.g. triangular or quadrilateral or semicircular in cross section, in a surface of the light-transmitting substrate 1 on which the first light-transmitting conductive layer 211 is to be formed, placing some pieces of metal wire in the respective grooves, applying the second light-transmitting conductive layer 212 to a surface of the conductive layer 211 at which the other part of the metal wire is exposed, and then, applying the semiconductor electrode 3 to a surface of the second light-transmitting conductive layer 212. It is not desirable to leave some space between the first light-transmitting conductive layer 211 and the metal wire. An adhesive is thus preferably filled into the space between the first light-transmitting conductive layer 211 and the metal wire so as to join the first light-transmitting conductive layer 211 and the metal wire by an adhesive layer 82.

As shown in FIG. 13, the first collector electrode 71 may be arranged in a surface of the light-transmitting conductive layer 21 with one part of the electrode 71 being embedded in the light-transmitting substrate 1 and the conductive layer 21 and the other part of the electrode 71 being covered by an adhesive layer 81. The adhesive for the adhesive layer 81 is not particularly restricted. An acrylic adhesive, a urethane adhesive and an epoxy adhesive are usable. The adhesive may or may not have a conducting property. It is however preferable that the adhesive has a conducting property for further improvement in charge collection efficiency. The adhesive can be prepared by adding thereto a powder of tungsten, nickel, titanium or noble metal such as platinum or gold. It is also preferable that the adhesive has sufficient resistance to corrosion by an electrolyte etc. Tungsten having high conductivity and corrosion resistance is especially preferred. The proportion of the metal wire embedded in the light-transmitting substrate 1 and the light-transmitting conductive layer 21 is not particularly restricted but can be set to 50 to 90%, especially 60 to 90%, more especially 65 to 80%. When this proportion is in the range of 50 to 90%, it is possible to support the first collector electrode 71 by the light-transmitting substrate 1 and the light-transmitting conductive layer 21 properly and connect the first collector electrode 71 to the light-transmitting conductive layer 21 assuredly for improvement in charge collection efficiency.

When the substrate is a resin substrate in this case, the first collector electrode 71 can be arranged as shown in FIG. 13 by placing some pieces of metal wire in a forming die, forming the light-transmitting conductive layer 21 applied to the light-transmitting substrate 1 upon contact with the metal wire, thereby embedding one part of the metal wire in the light-transmitting substrate 1 and the light-transmitting conductive layer 21, applying the adhesive layer 81 to a surface of the light-transmitting conductive layer 21 at which the other part of the metal wire is exposed and its surroundings, and then, applying the semiconductor electrode 3 to surfaces of the light-transmitting conductive layer 21 and the adhesive layer 81. The first collector electrode 71 may alternatively be arranged as shown in FIG. 13 by placing some pieces of metal wire on a surface of the light-transmitting conductive layer 21 applied to the light-transmitting substrate 1, heating and pressing the metal wire to embed one part of the metal wire in the light-transmitting substrate 1 and the light-transmitting conductive layer 21, applying the adhesive layer 81 to a surface of the light-transmitting conductive layer 21 at which the other part of the metal wire is exposed and its surroundings, and then, applying the semiconductor electrode 3 to surfaces of the light-transmitting conductive layer 21 and the adhesive layer 81. When the substrate is a glass substrate, the first collector electrode 71 can be arranged as shown in FIG. 14 by forming collector electrode installation grooves, each of which is polygonal e.g. triangular or quadrilateral or semicircular in cross section, in a surface of the light-transmitting substrate 1 on which the light-transmitting conductive layer 21 is to be formed, placing some pieces of metal wire in the respective grooves, applying the adhesive layer 81 to a surface of the light-transmitting conductive layer 21 at which the other part of the metal wire is exposed and its surroundings, and then, applying the semiconductor electrode 3 to surfaces of the light-transmitting conductive layer 21 and the adhesive layer 81. It is not desirable to leave some space between the light-transmitting conductive layer 21 and the metal wire. An adhesive is thus preferably filled into the space between the light-transmitting conductive layer 21 and the metal wire so as to join the light-transmitting conductive layer 21 and the metal wire by an adhesive layer 82.

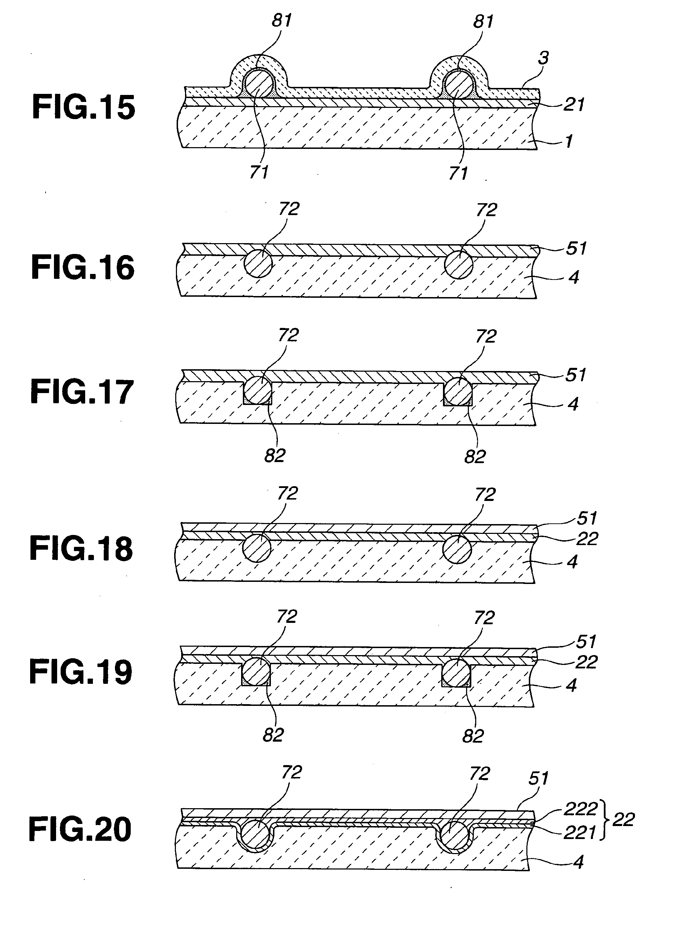

As shown in FIG. 15, the first collector electrode 71 may be arranged on a surface of the light-transmitting conductive layer 21 and fixed to the light-transmitting conductive layer 21 by an adhesive layer 81. Although the adhesive layer 81 can be formed using the same adhesive as mentioned above, it is preferable that the adhesive has an adequate conducting property due to the fact that the first collector electrode 71 is only in contact with the light-transmitting conductive layer 21 in this configuration. Preferably, the adhesive also has resistance to corrosion by an electrolyte etc.

When the substrate is either of a resin substrate and a glass substrate in this case, the first collector electrode 71 can be arranged as shown in FIG. 15 by placing some pieces of metal wire on the light-transmitting conductive layer 21, fixing the metal wire to the light-transmitting conductive layer 21 by the adhesive layer 81, and then, applying the semiconductor electrode 3 to surfaces of the light-transmitting conductive layer 21 and the adhesive layer 81. Although the adhesive layer 81 is applied to surround the whole peripheral surface of the metal wire except for the contact portion between the metal wire and the light-transmitting conductive layer 21 in FIG. 15, the adhesive layer 81 may alternatively be applied to surround only a portion of the metal wire located at the bottom side of the two lateral wire faces.

The second collector electrode 72 may be arranged between the substrate 4 and the catalyst layer 51 with one part of the electrode 72 being embedded in the substrate 4 and the other part of the electrode 72 being held in contact with the catalyst layer 51 as shown in FIG. 16. The proportion of the metal wire embedded in the substrate 4 is not particularly restricted but can be set to 50 to 90%, especially 60 to 90%, more especially 65 to 80%. When this proportion is in the range of 50 to 90%, it is possible to support the second collector electrode 72 by the substrate 4 properly and connect the second collector electrode 72 to the catalyst layer 51 assuredly for improvement in charge collection efficiency.

The arrangement method of the second collector electrode 72 is not particularly restricted in this case. When the substrate is a ceramic substrate, the second collector electrode 72 can be arranged as shown in FIG. 16 by placing some pieces of metal wire on a surface of a ceramic green sheet, which is to be formed into the substrate 4 by sintering, pressing the metal wire (if required, heating the metal wire during the pressing) to embed one part of the metal wire into the substrate sheet, sintering the thus-obtained substrate sheet at a temperature appropriate to the kind of the ceramic material, and then, applying the catalyst layer 51 to a surface of the substrate at which the other part of the metal wire is exposed. It is desirable to control the sintering atmosphere to an inert atmosphere or a reducing atmosphere since tungsten becomes oxidized at such a sintering temperature. When the substrate is a resin substrate, the second collector electrode 72 can be arranged as shown in FIG. 16 by placing some pieces of metal wire in a forming die, forming the substrate by the use of this forming die to embed one part of the metal wire into the substrate, and then, applying the catalyst layer 51 to a surface of the substrate at which the other part of the metal wire is exposed. The second collector electrode 72 may alternatively be arranged as shown in FIG. 16 by preparing a resin substrate of predetermined form, placing some pieces of metal wire on a surface of the resin substrate, heating and pressing the metal wire to embed one part of the metal wire in the substrate, and then, applying the catalyst layer 51 to a surface of the substrate at which the other part of the metal wire is exposed. When the substrate is a glass substrate, the second collector electrode 72 can be arranged as shown in FIG. 17 by forming collector electrode installation grooves, each of which is polygonal e.g. triangular or quadrilateral or semicircular in cross section, in a surface of the substrate, placing some pieces of metal wire in the respective grooves, and then, applying the catalyst layer 51 to the surface of the substrate. It is not desirable to leave some space between the glass substrate and the metal wire. An adhesive is thus preferably filled into the space between the glass substrate and the metal wire so as to join the glass substrate and the metal wire by an adhesive layer 82.

As shown in FIG. 18, the second collector electrode 72 may be arranged between the substrate 4 and the conductive layer 22 with one part of the electrode 72 being embedded in the substrate 4 and the other part of the electrode 72 being held in contact with the conductive layer 22. The proportion of the metal wire embedded in the substrate 4 is not particularly restricted but can be set to 50 to 90%, especially 60 to 90%, more especially 65 to 80%. When this proportion is in the range of 50 to 90%, it is possible to support the second collector electrode 72 by the substrate 4 properly and connect the second collector electrode 72 to the conductive layer 22 assuredly for improvement in charge collection efficiency.

When the substrate is a ceramic substrate in this case, the second collector electrode 72 can be arranged as shown in FIG. 18 by placing some pieces of metal wire on a surface of a ceramic green sheet, which is to be formed into the substrate 4 by sintering, pressing the metal wire (if required, heating the metal wire during the pressing) to embed one part of the metal wire into the substrate sheet, sintering the thus-obtained substrate sheet at a temperature appropriate to the kind of the ceramic material, applying the conductive layer 22 to a surface of the substrate at which the other part of the metal wire is exposed, and then, applying the catalyst layer 51 to a surface of the conductive layer 22. It is desirable to control the sintering atmosphere to an inert atmosphere or a reducing atmosphere since tungsten becomes oxidized at such a sintering temperature. When the substrate is a resin substrate, the second collector electrode 72 can be arranged as shown in FIG. 18 by placing some pieces of metal wire in a forming die, forming the substrate by the use of this forming die to embed one part of the metal wire into the substrate, applying the conductive layer 22 to a surface of the substrate at which the other part of the metal wire is exposed, and then, applying the catalyst layer 51 to a surface of the conductive layer 22. The second collector electrode 72 may alternatively be arranged as shown in FIG. 18 by preparing a resin substrate of predetermined form, placing some pieces of metal wire on a surface of the resin substrate, heating and pressing the metal wire to embed one part of the metal wire in the substrate, applying the conductive layer 22 to a surface of the substrate at which the other part of the metal wire is exposed, and then, applying the catalyst layer 51 to a surface of the conductive layer 22. When the substrate is a glass substrate, the second collector electrode 72 can be arranged as shown in FIG. 19 by forming collector electrode installation grooves, each of which is polygonal e.g. triangular or quadrilateral or semicircular in cross section, in a surface of the substrate 4, placing some pieces of metal wire in the respective grooves, applying the conductive layer 22 to the surface of the substrate 4, and then, applying the catalyst layer 51 to a surface of the conductive layer 22. It is not desirable to leave some space between the glass substrate and the metal wire. An adhesive is thus preferably filled into the space between the glass substrate and the metal wire so as to join the glass substrate and the metal wire by an adhesive layer 82.

As shown in FIG. 20, the second collector electrode 72 may be arranged in the conductive layer 22 with one part of the electrode 72 being embedded in the substrate 4 and a first conductive layer portion 221 and the other part of the electrode 72 being held in contact with a second conductive layer portion 222. The proportion of the metal wire embedded in the substrate 4 and the second conductive layer portion 221 is not particularly restricted but can be set to 50 to 90%, especially 60 to 90%, more especially 65 to 80%. When this proportion is in the range of 50 to 90%, it is possible to support the second collector electrode 72 by the substrate 4 and the first conductive layer portion 221 properly and connect the second collector electrode 72 to the conductive layer 22 assuredly for improvement in charge collection efficiency.

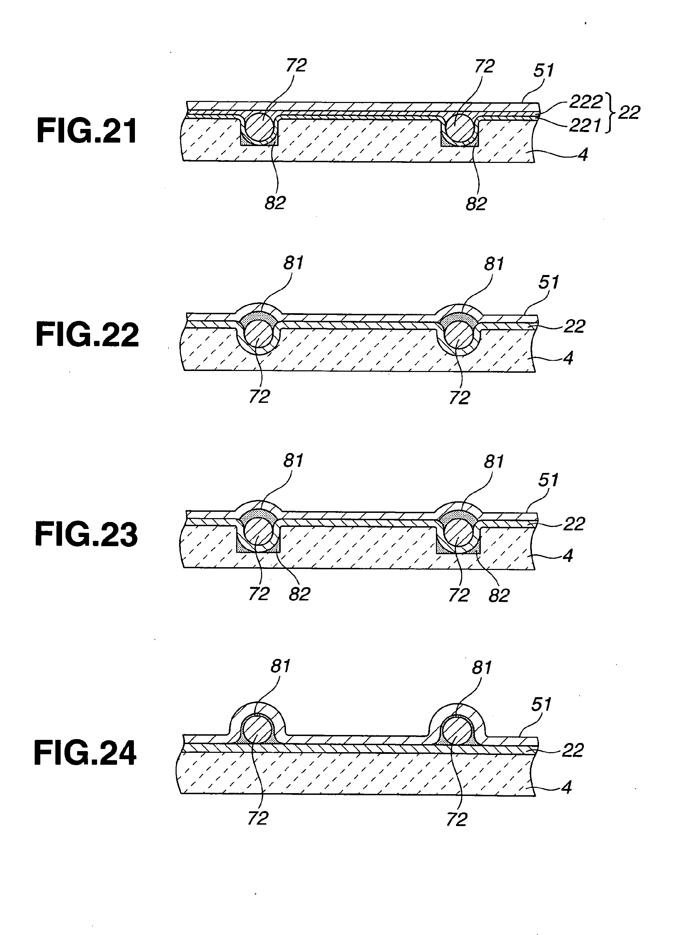

When the substrate is a ceramic substrate in this case, the second collector electrode 72 can be arranged as shown in FIG. 20 by placing some pieces of metal wire on a surface of the first conductive layer 221 applied to the ceramic substrate, pressing the metal wire (if required, heating the metal wire during the pressing) to embed one part of the metal wire into the ceramic substrate and the first conductive layer 221, and then, applying the second conductive layer 222 to a surface of the first conductive layer 221 at which the other part of the metal wire is exposed. When the substrate is a resin substrate, the second collector electrode 72 can be arranged as shown in FIG. 20 by placing some pieces of metal wire in a forming die, forming the first conductive layer 221 applied to the substrate 4 upon contact with the metal wire, thereby embedding one part of the metal wire into the substrate 4 and the first conductive layer 221, and then, applying the second conductive layer 222 to a surface of the first conductive layer 221 at which the other part of the metal wire is exposed. The second collector electrode 72 may alternatively be arranged as shown in FIG. 20 by placing some pieces of metal wire on a surface of the first conductive layer 221 applied to the substrate 4, heating and pressing the metal wire to embed one part of the metal wire in the substrate 4 and the first conductive layer 221, and then, applying the second conductive layer 222 to a surface of the first conductive layer 221 at which the other part of the metal wire is exposed. When the substrate is a glass substrate, the second collector electrode 72 can be arranged as shown in FIG. 21 by forming collector electrode installation grooves, each of which is polygonal e.g. triangular or quadrilateral or semicircular in cross section, in a surface of the substrate 4 on which the first conductive layer 221 is to be formed, placing some pieces of metal wire in the respective grooves, and then, applying the second conductive layer 222 to the surface of the first conductive layer 221. It is not desirable to leave some space between the first conductive layer 221 and the metal wire. An adhesive is then preferably filled into the space between the first conductive layer 221 and the metal wire so as to join the first conductive layer 221 and the metal wire by an adhesive layer 82.

As shown in FIG. 22, the second collector electrode 72 may be arranged on the conductive layer 22 with one part of the electrode 72 being embedded in the substrate 4 and the conductive layer 22 and the other part of the electrode 72 being covered by an adhesive layer 81. The adhesive layer 81 can be formed using the same adhesive as mentioned above. Preferably, the adhesive has a conducting property as well as resistance to corrosion by an electrode etc. The proportion of the metal wire embedded in the substrate 4 and the conductive layer 22 is not particularly restricted and can be set to 50 to 90%, especially 60 to 90%, more especially 65 to 80%. When this proportion is in the range of 50 to 90%, it is possible to support the second collector electrode 72 by the substrate 4 and the conductive layer 22 properly and connect the second collector electrode 72 to the conductive layer 22 assuredly for improvement in charge collection efficiency.

When the substrate is a ceramic substrate, the second collector electrode 72 can be arranged as shown in FIG. 22 by placing some pieces of metal wire on a surface of the conductive layer 22 applied to the ceramic substrate, pressing the metal wire (if required, heating the metal wire during the pressing) to embed one part of the metal wire into the ceramic substrate and the conductive layer 22, applying the adhesive layer 81 to a surface of the conductive layer 22 at which the other part of the metal wire is exposed and its surroundings, and then, applying the catalyst layer 51 to surfaces of the conductive layer 22 and the adhesive layer 81. When the substrate is a resin substrate, the second collector electrode 72 can be arranged as shown in FIG. 22 by placing some pieces of metal wire in a forming die, forming the conductive layer 22 applied to the substrate 4 upon contact with the metal wire, thereby embedding one part of the metal wire into the substrate 4 and the conductive layer 22, applying the adhesive layer 81 to a surface of the conductive layer 22 at which the other part of the metal wire is exposed and its surroundings, and then, applying the catalyst layer 51 to surfaces of the conductive layer 22 and the adhesive layer 81. The second collector electrode 72 may alternatively be arranged as shown in FIG. 22 by placing some pieces of metal wire on a surface of the conductive layer 22 applied to the substrate 4, heating and pressing the metal wire to embed one part of the metal wire in the substrate 4 and the conductive layer 22, applying the adhesive layer 81 to a surface of the conductive layer 22 at which the other part of the metal wire is exposed and its surroundings, and then, applying the catalyst layer 51 to surfaces of the conductive layer 22 and the adhesive layer 81. When the substrate is a glass substrate, the second collector electrode 72 can be arranged as shown in FIG. 23 by forming collector electrode installation grooves, each of which is polygonal e.g. triangular or quadrilateral or semicircular in cross section, in a surface of the substrate 4 on which the conductive layer is to be formed, placing some pieces of metal wire in the respective grooves, applying the adhesive layer 81 to a surface of the conductive layer 22 at which the other part of the metal wire is exposed and its surroundings, and then, applying the catalyst layer 51 to surfaces of the conductive layer 22 and the catalyst layer 81. It is not desirable to leave some space between the conductive layer 22 and the metal wire. An adhesive is then preferably filled into the space between the conductive layer 22 and the metal wire so as to join the conductive layer 22 and the metal wire by an adhesive layer 82.

As shown in FIG. 24, the second collector electrode 72 may be arranged on a surface of the conductive layer 22 and fixed to the conductive layer 22 by an adhesive layer 81. Although the adhesive layer 81 can be formed using the same adhesive as mentioned above, it is preferable that the adhesive has an adequate conducting property due to the fact that the second collector electrode 72 is only in contact with the conductive layer 22 in this configuration. Preferably, the adhesive also has resistance to corrosion by an electrolyte etc.

When the substrate is a ceramic substrate, a resin substrate and a glass substrate in this case, the second collector electrode 72 can be arranged as shown in FIG. 24 by placing some pieces of metal wire on the conductive layer 22, fixing the metal wire to the conductive layer 22 by the adhesive layer 81, and then, applying the catalyst layer 51 to surfaces of the conductive layer 22 and the adhesive layer 81. Although the adhesive layer 81 is applied to surround the whole peripheral surface of the metal wire except for the contact portion between the metal wire and the conductive layer 22 in FIG. 24, the adhesive layer 81 may alternatively be applied to surround only a portion of the metal wire located at the bottom side of the two lateral wire faces.

In the case where the substrate 4 is a ceramic substrate in direct contact with the adhesive layers 81 and 82, the adhesive for the adhesive layers 81 and 82 preferably contains a glass component or a ceramic component same as that of the ceramic substrate in an amount of 0.5 to 15% by mass, especially 1 to 10% by mass, more especially 2 to 5% by mass, with the proviso that the total amount of the adhesive is determined as 100% by mass. This allows a stronger joint between the ceramic substrate and the semiconductor electrode 72.

The electrolyte layer 6 is retained at least between the semiconductor electrode 3 and the catalyst layer 51. When the semiconductor electrode 3 and the first collector electrode 71 are porous, the electrolyte layer 6 may also be retained by being impregnated in the first collector electrode 71 and the like. The electrolyte layer 61 can be prepared from an electrolyte solution. This electrolyte solution generally contains an electrolyte, a solvent and various additives.

Examples of the electrolyte of the electrolyte layer 6 include: (1) $I_2$ and an iodide; (2) $Br_2$ and a bromide; (3) a metal complex such as a ferrocyanide-ferricyanide complex or a ferrocene-ferricinium ion complex; (4) a sulfur compound such as sodium polysulfide or alkylthiol-alkyldisulfide; (5) a viologen dye; and (6) hydroquinone-quinone. As the iodide of the electrolyte (1), there can be used metal iodides such as LiI, NaI, KI, CsI and $CaI_2$, quaternary ammonium iodides such as tetralkylammonium iodide, pyridinium iodide and imidazolium iodide and the like. As the bromide of the electrolyte (2), there can be used metal bromides such as LiBr, NaBr, KBr, CsBr and $CaBr_2$, quaternary ammonium bromides such as a tetralkylammonium bromide and pyridinium bromide and the like. Among these electrolyte materials, especially preferred is a combination of $I_2$ and LiI or the quaternary ammonium iodide such as pyridinium iodide or imidazolium iodide. These electrolyte materials may be used solely or in combination thereof.

The solvent of the electrolyte layer 6 is preferably a solvent having low viscosity, high ionic mobility and sufficient ionic conductance. Examples of such a solvent include: (1) carbonates such as ethylene carbonate and propylene carbonate; (2) heterocyclic compounds such as 3-methyl-2-oxazolidinone; (3) ethers such as dioxane and diethyl ether; (4) chain ethers such as ethylene glycol dialkylethers, propylene glycol dialkylethers, polyethylene glycol dialkylethers and polypropylene glycol dialkylethers; (5) monoalcohols such as methanol, ethanol, ethylene glycol monoalkylethers, propylene glycol monoalkylethers, polyethylene glycol monoalkylethers and polypropylene glycol monoalkylethers; (6) polyalcohols such as ethylene glycol, propylene glycol, polyethylene glycol, polypropylene glycol and glycerin; (7) nitriles such as acetonitrile, glutarodinitrile, methoxyacetonitrile, propionitrile and benzonitrile; and (8) aprotic polar solvents such as dimethylsulfoxide and sulfolane.

The thickness of the electrolyte layer 6 is not particularly restricted and can be adjusted to 200 $\mu$m or smaller, especially 100 $\mu$m or smaller, more especially 50 $\mu$m or smaller (normally 1 $\mu$m or larger). When the thickness of the electrolyte layer 6 is in the range of 200 $\mu$m or smaller, it is possible to obtain a sufficient increase in photoelectric conversion efficiency.

The electrolyte layer 6 is formed between the semiconductor electrode 3 and the catalyst layer 51. The forming method of the electrolyte layer 6 is not particularly restricted. In the case of the electrolyte layer 6 being formed from the electrolyte solution, the electrolyte layer 6 can be formed by providing a seal of resin or glass in space around the semiconductor electrode 3 between the light-transmitting conductive layer 21 and the ceramic substrate 4 or the catalyst layer 51 or, if the conductive layer 22 is provided, between the light-transmitting catalyst layer 51 and the ceramic substrate 4, the catalyst layer 51 or the conductive layer 22, and then, injecting the electrolytic solution into the thus-sealed space. In this case, the electrolytic solution is injected into the sealed space through an injection hole of the first base member 101 or the second base member 102. The injection hole can be formed in either of the first base member 101 and the second base member 102 and is preferably formed in the base member that allows easier perforation. For example, the injection hole is not easy to perforate in the first base member 101 e.g. when the light-transmitting substrate 1 is a glass substrate. By contrast, it is easier to perforate the injection hole in the substrate 4 when the substrate is of ceramic. The injection hole is formed very easily in the ceramic substrate by the use of a punching machine especially when the ceramic substrate is still green. It is thus desirable to form the injection hole in the second base member 102 when the substrate 4 is a ceramic substrate. Although one injection hole is adequate to inject the electrolytic solution, another hole could conceivably be formed for air vent. The formation of such an air vent hole allows easier injection of the electrolytic solution.

Examples of the resin used for the sealing around the semiconductor electrode 3 include thermosetting resins such as epoxy resins, urethane resins, polyimide resins and thermosetting polyester resins. The seal can alternatively be provided by the glass. It is desirable to seal with the glass especially when the solar cell requires long-term durability.

As described above, each of the dye-sensitized solar cells 201-206 according to various embodiments of the present invention includes: the pair of oppositely arranged substrates 1 and 4, at least one of which is partially provided with a light-transmitting property; the semiconductor electrode 3, the first collector electrode 71 and the catalyst layer 51 disposed between the substrates 1 and 4; and the electrolyte layer 6 retained at least between the semiconductor electrode 3 and the catalyst layer 51, wherein the first collector electrode 71 for collecting electrons from the semiconductor electrode 3 contains therein tungsten highly resistant to corrosion by an electrolyte etc. The dye-sensitized solar cells 201-206 are thus able to prevent the corrosion of the first collector electrode 71 so as to obtain an increase in durability while attaining improved photoelectric conversion efficiencies.

The arrangement of the second collector electrode 72 for collecting electrons from the catalyst layer 51, especially when the second collector electrode 72 contains tungsten, allows a further improvement in photoelectric conversion efficiency.

The arrangement of the conductive layer 22 between the substrate 4 and the catalyst layer 51 also allow a further improvement in photoelectric conversion efficiency.

Such a further improvement in photoelectric conversion efficiency can be also obtained when the second collector electrode 72 is arranged between the conductive layer 22 and the catalyst layer 51, in the conductive layer 22 or on a surface of the conductive layer 22.

When the substrate 4 is made of ceramic to function as a supporting substrate, each of the dye-sensitized solar cells 201-206 becomes high in strength and durability.

Each of the first collector electrode 71 and the second collector electrode 72, when having a planar form of grid, comb or radial pattern, can function properly as well as securing an adequate light-transmitting property.

The first collector electrode 71 can be increased in charge collection efficiency and held properly when the first collector electrode 71 is made of metal wire and arranged between the light-transmitting substrate 1 and the light-transmitting conductive layer 21 with one part of the first collector electrode 71 being embedded in the light-transmitting substrate 1 and when the light-transmitting conductive layer 21 has a first light-transmitting conductive layer portion 211 in contact with the light-transmitting substrate 1 and a second light-transmitting conductive layer portion 212 in contact with the first light-transmitting conductive layer portion 211 and, at the same time, the first collector electrode 71 is made of metal wire and arranged between the first and second light-transmitting conductive layer portions 211 and 212 with one part of the first collector electrode 71 being embedded in the light-transmitting substrate 1 and the first light-transmitting conductive layer 211.

When the first collector electrode 71 is made of metal wire and arranged in the light-transmitting conductive layer 21 with one part of the first collector electrode 71 being embedded in the light-transmitting substrate 1 and the light-transmitting conductive layer 21 and the other part of the first collector electrode 71 being covered by the adhesive layer 81 and when the first collector electrode 71 is made of metal wire, arranged on a surface of the light-transmitting conductive layer 21 and fixed to the light-transmitting conductive layer 21 by the adhesive layer 81, the first collector electrode 71 can be produced more easily, held properly and increased in charge collection efficiency.

The second collector electrode 72 can be increased in charge collection efficiency and held properly when the second collector electrode 72 is made of metal wire and arranged between the substrate 4 and the catalyst layer 51 with one part of the second collector electrode 72 being embedded in the substrate 4.

The second collector electrode 72 can be further increased in charge collection efficiency and held properly when the second collector electrode 72 is made of metal wire and arranged between the conductive layer 22 and the catalyst layer 51 with one part of the second collector electrode 72 being embedded in the substrate 4 and the light conductive layer 22 and when the conductive layer 22 has a first conductive layer portion 221 in contact with the substrate 4 and a second conductive layer portion 222 in contact with the first conductive layer portion 221 and, at the same time, the second collector electrode 72 is made of metal wire and arranged between the first and second conductive layer portions 221 and 222 with one part of the second collector electrode 72 being embedded in the substrate 4 and the first conductive layer portion 221.

Further, the first collector electrode 72 can be produced more easily, held properly and increased in charge collection efficiency when the second collector electrode 72 is made of metal wire and arranged in a surface of the conductive layer 22 with one part of the second collector electrode 72 being embedded in the substrate 4 and the conductive layer 22 and when the second collector electrode 72 is made of metal wire, arranged on a surface of the conductive layer 22 and fixed to the conductive layer 22 by the adhesive layer 82

When a seal of resin or glass is provided in space between the light-transmitting substrate 1 or the light-transmitting conductive layer 2 land the substrate 4 or the catalyst layer 51 at a location around the semiconductor electrode 3 and when a seal of resin or glass is provided in space between the light-transmitting substrate 1 or the light-transmitting conductive layer 21 and the substrate 4, the catalyst layer 51 or the conductive layer 22 at a location around the semiconductor electrode 3, the semiconductor electrode 3 and the electrolyte layer 6 can be protected properly by selecting the material for the seal according to the use environment of the dye-sensitized solar cell and the type of a product into which the dye-sensitized solar cell is incorporated. The dye-sensitized solar cells 201-206 are thus able to attain high durability.

EXAMPLES

The present invention will be described in more detail with reference to the following examples of the dye-sensitized solar cells 201, 202, 204 and 205. It should be however noted that the following examples are only illustrative and not intended to limit the invention thereto.

Example 1

A dye-sensitized solar cell 201 shown in FIGS. 1-3 was manufactured by the following procedure.

(1) Production of First Base Member 101

A glass substrate having a length of 100 mm, a width of 100 mm and a thickness of 1 mm was prepared as a light-transmitting substrate 1. A first collector electrode 71 was formed with a width of 1 mm and a thickness of 1 $\mu$m on a surface of the substrate 1 by RF sputtering using tungsten (99.8 mass% pure) so as to surround three pieces of semiconductor electrode 3 to be provided in the later stage. After that, a light-transmitting conductive layer 21 of fluorine-doped tin oxide was formed by RF sputtering with a thickness of 500 nm on the surface of the substrate 1 to which the first collector electrode 71 had been applied. Then, three titanium electrode layers (as an electrode body) each having a length of 80 mm, a width of 27 mm and a thickness of 20 $\mu$m were formed by applying a paste containing titania particles of 10 to 20 $\mu$m in diameter (available under the trade name of "Ti-Nonoxide D/SP" from Solaronix) by screen printing, drying at 120°C for 1 hour and sintering at 480°C for 30 minutes. The thus-obtained laminate was immersed in an ethanol solution of ruthenium complex (available under the trade name of "535bis-TBA" from Solaronix) for 10 hours to impregnate the sintered titanium particles with a ruthenium complex sensitizing dye 31 as partly enlarged in FIG. 3 and thereby complete three pieces of semiconductor electrode 3. The first base member 101 was obtained in this manner. A lead electrode E of platinum was attached to an end portion of the light-transmitting conductive layer 21.

(2) Production of Second Base Member 102
Next, a slurry was prepared by mixing 100 parts by mass of an aluminum powder of 99.9 mass% purity with 5 parts by mass of a mixed powder of magnesia, calcia and silica as a sintering aid, 2 parts by mass of a binder and a solvent. Using this slurry, an alumina green sheet was produced by a doctor blade process. Conductive coating films (for collector electrode 72) were then formed on a surface of the alumina green sheet with a thickness of 10 $\mu$m by screen printing using a tungsten-containing metalized ink (with a tungsten content of 95 mass%). The thus-obtained laminate were dried at 100°C for 30 minutes and pressed with 0.2 MPa of pressure for improvement in smoothness. Subsequently, a platinum-containing metalized ink was prepared. Using this metalized ink, conductive coating films for catalyst layer 51 were formed with a thickness of 500 nm by screen printing on surfaces of the alumina green sheet and the conductive coating films of the collector electrode 72. The laminate was integrally sintered at 1500°C in a reducing atmosphere. The second base member 102 was thus produced in which three pieces of catalyst layer 51 having a length of 80 mm, a width of 27 mm and a thickness of 500 nm as well as the second collector electrode 72 were formed on the surface of the alumina substrate 4. A lead electrode of platinum was attached to an end portion of the second collector electrode 72.

(3) Manufacturing of Dye-sensitized Solar Cell 201

An adhesive sheet of thermoplastic resin having a thickness of 60 $\mu$m (available under the trade name of "SX1170-60" from Solaronix) was provided to a portion of the alumina substrate 4 of the second base member 102 on which the catalyst layer 51 had not been formed. The first base member 101 was then arranged on the second base member 102 in such a manner that the semiconductor electrode 3 of the first base member 101 faced the catalyst layer 51 of the second base member 102. The thus-obtained laminate was placed on a hot plate whose temperature had been adjusted to 100°C, with the aluminum substrate 4 being directed downward, and heated for 5 minutes to form a joint 9 between the light-transmitting conductive layer 21 of the first base member 101 and the aluminum substrate 4 of the second base member 102. An electrolyte layer 6 was prepared between the semiconductor electrode 3 and the catalyst layer 51 by injecting an iodine electrolytic solution (available under the trade name of "PN-50" from Solaronix) through injection holes at given positions of the second base member 102. The dye-sensitized solar cell 201 was completed in this manner. After the injection of the iodine electrolytic solution, the injection holes were sealed with the same adhesive as above.

(4) Performance Evaluation of Dye-sensitized Solar Cell 201

Artificial sunlight was irradiated onto the dye-sensitized solar cell 201 produced by the above procedures (1) to (3) with an intensity of 100 mW/cm$^2$ by means of a solar simulator whose spectrum had been adjusted to AM 1.5. The solar cell 201 characteristically showed a conversion efficiency of 7.2%.

Example 2

A dye-sensitized solar cell 202 was manufactured by the same procedures as in Example 1, except that the solar cell 202 was provided with a first collector electrode 71 but not with a second collector electrode 72 as shown in FIG. 4. A performance evaluation was then conducted on the dye-sensitized solar cell 202 in the same manner as in Example 1. The solar cell 202 characteristically showed a conversion efficiency of 6.0% to achieve practically sufficient performance although it was slightly lower than that of Example 1.

Example 3

A dye-sensitized solar cell 204 shown in FIG. 6 was manufactured by the following procedure. The appearance of the dye-sensitized solar cell 204, when viewed from the side of a resin substrate 1 of a first base member 101, was similar to that of Example 1 shown in FIG. 2.

(1) Production of First Base Member 101

A resin substrate of polyethylene terephthalate resin having a length of 100 mm, a width of 100 mm and a thickness of 1 mm was prepared as a light-transmitting substrate 1. Some pieces of tungsten wire of 20 $\mu$m in diameter (to be formed into a first collector electrode 71) were arranged on a surface of the resin substrate 1 in a parallel planar configuration. After that, the resin substrate 1 and the tungsten wire were heated together at 180°C and formed by pressing them against each other with a pressing machine so as to apply a pressure uniformly in a planar direction and thereby embed about 90% of the tungsten wire, when viewed in cross section, into the resin substrate 1. A light-transmitting conductive layer 21 of fluorine-doped tin oxide having a thickness of 500 nm was then applied by RF sputtering to the surface of the substrate 1 in which the tungsten wire was embedded. Subsequently, three titanium electrode layers (as an electrode body) each having a length of 80 mm, a width of 27 mm and a thickness of 20 $\mu$m was formed by spraying a titanium sol containing titania particles of 10 to 20 $\mu$m in diameter onto a surface of the light-transmitting conductive layer 21 and drying at 120°C for 1 hour. The thus-obtained laminate was immersed in an ethanol solution of ruthenium complex (available under the trade name of "535bis-TBA" from Solaronix) for 10 hours to impregnate the sintered titanium particles with a ruthenium complex sensitizing dye 31 as partly enlarged in FIG. 3 and thereby complete three pieces of semiconductor electrode 3. The first base member 101 was obtained in this way. A lead electrode E of platinum was attached to an end portion of the light-transmitting conductive layer 21.

(2) Production of Second Base Member 102

Next, a slurry was prepared by mixing 100 parts by mass of an aluminum powder of 99.9 mass% purity with 5 parts by mass of a mixed powder of magnesia, calcia and silica as a sintering aid, 2 parts by mass of a binder and a solvent. Using this slurry, an alumina green sheet of about 110 mm in length, about 110 mm in width and about 1.1 mm in thickness was produced by a doctor blade process. Some pieces of tungsten wire having a diameter of 20 $\mu$m (to be formed into a second collector electrode 72) was arranged on a surface of the alumina green sheet in a parallel planar configuration. The aluminum green sheet and the tungsten wire were subjected to forming by pressing them against each other with a pressing machine in such a manner as to apply a pressure uniformly in a planar direction and thereby embed about 90% of the tungsten wire, when viewed in cross section, into the alumina green sheet. The thus-obtained laminate was subsequently sintered at 1500°C for 5 hours in a nitrogen gas atmosphere to complete a tungsten wire embedded ceramic substrate 4 having a length of 100 mm, a width of 100 mm and a thickness of 1 mm. A conductive layer 22 of 500 nm in thickness was formed on the whole surface of the substrate 4 in the same manner as the light-transmitting conductive layer 21 in the above procedure (1). Namely, the conductive layer 22 was provided as a light-transmitting conductive layer of the same material as the light-transmitting conductive layer 21. A platinum containing paste (available under the trade name of "Pt-Catalyst T/SP" from Solaronix) was applied to a surface of the conductive layer 22 by screen printing. The thus-obtained laminate was died at 200°C for 2 hours in a reducing atmosphere and sintered at 400°C for 30 minutes to complete three pieces of catalyst layer 51 each having a length of 80 nm, a width of 27 mm and a thickness of 100 nm. The second base member 102 was obtained in this way. A lead electrode of platinum was attached to an end portion of the second collector electrode 72.

(3) Manufacturing of Dye-sensitized Solar Cell 204

An adhesive sheet of thermoplastic resin having a thickness of 60 $\mu$m (available under the trade name of "SX1170-60" from Solaronix) was provided to a portion of the conductive layer 22 of the second base member 102 on which the catalyst layer 51 had not been formed. The first base member 101 was then arranged on the second base member 102 in such a manner that the semiconductor electrode 3 of the first base member 101 faces the catalyst layer 51 of the second base member 102. The thus-obtained laminate was placed on a hot plate whose temperature had been adjusted to 80°C, with the substrate 4 being directed downward, and heated for 5 minutes to form a joint 9 between the light-transmitting conductive layer 21 of the first base member 101 and the conductive layer 22 of the second base member 102. An electrolyte layer 6 was prepared between the semiconductor electrode 3 and the catalyst layer 51 by injecting an iodine electrolytic solution (available under the trade name of "PN-50" from Solaronix) through injection holes at given positions of the second base member 102. The dye-sensitized solar cell 204 of FIG. 6 was herewith completed. After the injection of the iodine electrolytic solution, the injection holes were sealed with the same adhesive as above.

(4) Performance Evaluation of Dye-sensitized Solar Cell 201

A performance evaluation was conducted on the dye-sensitized solar cell 203 in the same manner as in Example 1. The solar cell 204 characteristically showed a conversion efficiency of 4.0%.

Example 4

A dye-sensitized solar cell 205 was manufactured by the same procedures as in Example 3, except that it was provided with a first collector electrode 71 but not with a second collector electrode 72 as shown in FIG. 7. A performance evaluation was then conducted on the dye-sensitized solar cell 205 in the same manner as in Example 1. The solar cell 202 characteristically showed a conversion efficiency of 3.2% to achieve practically sufficient performance although it was slightly lower than that of Example 1.

Comparative Example

A dye-sensitized solar cell was manufactured by the same procedures as in Example 3, except that the solar cell was provided with no first collector electrode 71 and no second collector electrode 72. A performance evaluation was conducted on this dye-sensitized solar cell in the same manner as in Example 1. The solar cell of Comparative Example had a conversion efficiency of 2.9% and was lower in performance than all of Examples 1-4.

Although the present invention has been described with reference to the specific embodiments of the invention, the invention is not limited to the above-described embodiments. Various modification and variation of the embodiments described above will occur to those skilled in the art in light of the above teaching.

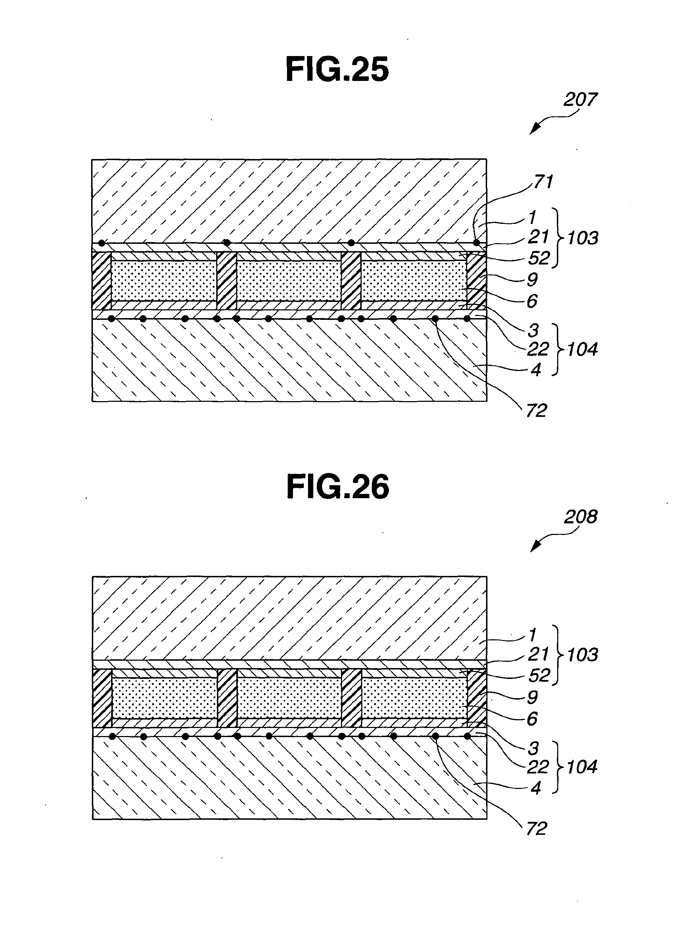

For example, there may be provided a dye-sensitized solar cell 207 in which a semiconductor electrode 3 is provided on the side of a substrate 4, as shown in FIG. 25, when the substrate 4 is of ceramic. More specifically, the dye-sensitized solar cell 207 includes a first base member 103, a second base member 104 and an electrolyte layer 6. The first base member 103 has a light-transmitting substrate 1, a light-transmitting conductive layer 21 formed on a surface of the light-transmitting substrate 1 and a light-transmitting catalyst layer 52 formed on a surface of the light-transmitting conductive layer 21. The second base member 104 has the substrate 4, a conductive layer 22 formed on a surface of the substrate 4 and the semiconductor electrode 3 formed on a surface of the conductive layer 22 and containing a dye-sensitized solar cell 31. The dye-sensitized solar cell 207 further includes a first collector electrode 71 formed between the light-transmitting substrate 1 and the light-transmitting catalyst layer 52 in the first base member 103 and a second collector electrode 72 formed between the substrate 4 and the conductive layer 22 in the second base member 104. There may alternatively be provided a dye-sensitized solar cell 208 with a second collector electrode 72 solely as shown in FIG. 26.

The common structural components of the dye-sensitized solar cells 207 and 208 such as the light-transmitting substrates 1, the semiconductor electrodes 3, the conductive layer 22 and the electrolyte layers 6 can be the same as those of the dye-sensitized solar cell 205. The light-transmitting catalyst layer 52 can be made of the same material as the catalyst layer 51 of the dye-sensitized solar cell 205 etc. It is satisfying that the light-transmitting catalyst layer 52 has a light-transmitting property. The dye-sensitized solar cell 207 can be produced in the same manner as the dye-sensitized solar cell 205 etc. although there is a difference in the location of the semiconductor electrodes 3 between the dye-sensitized solar cell 205 and the dye-sensitized solar cell 207. The dye-sensitized solar cell 208 can be produced in the same manner as the dye-sensitized solar cell 206 etc. although there is a difference in the location of the semiconductor electrodes 3 between the dye-sensitized solar cell 206 and the dye-sensitized solar cell 208. It should be noted that, in the case of the dye-sensitized solar cells 207 and 208, the collector electrode disposed in the first base member 103 where the semiconductor electrode 3 is not provided is provisionally named the first collector electrode 71 and the collector electrode disposed in the second base member 104 where the semiconductor electrode is provided is provisionally named the second collector electrode 72, for ease of understanding.

Further, the electrolyte layer 6 may alternatively be provided using an ionic liquid of nonvolatile imidazolium salt, a gelated product thereof or a solid such as copper iodide or copper thiocyanate. The thickness of the electrolyte layer 6 is not particularly restricted and can be set to 200 $\mu$m or smaller, specifically 100 $\mu$m or smaller, more specifically 50 $\mu$m or smaller (normally 1 $\mu$m or larger) as in the case of using the electrolyte solution. When the upper limit of the electrolyte layer thickness is smaller than or equal to the above-specified value in either case, it is possible to obtain a sufficiently high conversion efficiency.

**Claims**

1. A dye-sensitized solar cell, comprising:

   a pair of oppositely arranged substrates;
   a semiconductor electrode, a first collector electrode and a catalyst layer disposed between the substrates, the semiconductor electrode containing a sensitizing dye, the first collector electrode being capable of collecting electrons from the semiconductor electrode;
   an electrolyte layer retained at least between the semiconductor electrode and the catalyst layer,

   wherein at least part of at least one of the substrates has a light-transmitting property; and wherein the first collector electrode contains tungsten.

2. The dye-sensitized solar cell according to claim 1, further comprising a second collector capable of collecting electrons from the catalyst layer, wherein the second collector electrode contains tungsten.

3. A dye-sensitized solar cell, comprising:

   a first base member having a first substrate provided with a light-transmitting property, a light-transmitting conductive layer formed on a surface of the first substrate and a semiconductor electrode formed on a surface of the light-transmitting conductive layer and containing a sensitizing dye;
   a second base member having a second substrate and a catalyst layer formed on a surface of the second substrate in such a manner that the catalyst layer faces the semiconductor electrode;
   an electrolyte layer formed between the semiconductor electrode and the catalyst layer; and
   one of the followings: (A) a first collector electrode formed between the first substrate and the light-transmitting conductive layer, in the light-transmitting conductive layer or on the surface of the light-transmitting conductive layer and containing tungsten; (B) a second collector electrode formed between the second substrate and the catalyst layer and containing tungsten; and (C) first and second collector electrodes, the first collector electrode being formed between the first substrate and the light-transmitting conductive layer, in the light-transmitting conductive layer or on the surface of the light-transmitting conductive layer, the second collector electrode being formed between the second substrate and the catalyst layer, at least one of the first and second collector electrodes containing tungsten.

4. The dye-sensitized solar cell according to claim 3, further comprising a conductive layer between the second substrate and the catalyst layer.

5. The dye-sensitized solar cell according to claim 4, wherein the second collector electrode is formed between the conductive layer and the catalyst layer, in the conductive layer or on a surface of the conductive layer.

6. The dye-sensitized solar cell according to any one of claims 3 to 5, wherein the second substrate is made of ceramic.

7. The dye-sensitized solar cell according to any one of claims 3 to 6, wherein each of the first and second collector electrodes has a planar form in a grid pattern, a comb pattern or a radial pattern.

8. The dye-sensitized solar cell according to any one of claims 3 to 7, wherein the first collector electrode is made of metal wire and arranged between the first substrate and the light-transmitting conductive layer with one part of the first collector electrode being embedded in the first substrate.

9. The dye-sensitized solar cell according to any one of claims 3 to 7, wherein the light-transmitting conductive layer has a first light-transmitting conductive layer portion in contact with the first substrate and a second light-transmitting conductive layer portion in contact with the first light-transmitting conductive layer portion; and wherein the first collector electrode is made of metal wire and arranged between the first and second light-transmitting conductive layer portions with one part of the first collector electrode being embedded in the first substrate and the first light-transmitting conductive layer portion.

10. The dye-sensitized solar cell according to any one of claims 3 to 7, wherein the first collector electrode is made of metal wire and arranged in the surface of the light-transmitting conductive layer with one part of the first collector electrode being embedded in the first substrate and the light-transmitting conductive layer and the other part of the first collector electrode being covered by an adhesive layer.

11. The dye-sensitized solar cell according to any one of claims 3 to 7, wherein the first collector electrode is made of metal wire, arranged on the surface of the light-transmitting conductive layer and fixed to the light-transmitting conductive layer by an adhesive layer.

12. The dye-sensitized solar cell according to any one of claims 3 to 11, wherein the second collector electrode is made of metal wire and arranged between the second substrate and the catalyst layer with one part of the second collector electrode being embedded in the second substrate.

13. The dye-sensitized solar cell according to any one of claims 4 to 11, wherein the second collector electrode is made of metal wire and arranged between the second substrate and the conductive layer with one part of the second collector electrode being embedded in the second substrate.

14. The dye-sensitized solar cell according to any one of claims 4 to 11, wherein the conductive layer has a first conductive layer portion in contact with the second substrate and a second conductive layer portion in contact with the first conductive layer portion; and wherein the second collector electrode is made of metal wire and arranged between the first and second conductive layer portions with one part of the second collector electrode being embedded in the second substrate and the first conductive layer portion.

15. The dye-sensitized solar cell according to any one of claims 4 to 11, wherein the second collector electrode is made of metal wire and arranged in the surface of the conductive layer with one part of the second collector electrode being embedded in the second substrate and the conductive layer and the other part of the second collector electrode being covered by an adhesive layer.

16. The dye-sensitized solar cell according to any one of claims 4 to 11, wherein the second collector electrode is made of metal wire, arranged on the surface of the conductive layer and fixed to the conductive layer by an adhesive layer.

17. The dye-sensitized solar cell according to any one of claims 3 to 16, wherein a seal of resin or glass is provided in space between the first substrate or the light-transmitting conductive layer and the second substrate or the catalyst layer at a location around the semiconductor electrode.

18. The dye-sensitized solar cell according to any one of claims 4 to 16, wherein a seal of resin or glass is provided in space between the first substrate or the light-transmitting conductive layer and the second substrate, the catalyst layer or the conductive layer at a location around the semiconductor electrode.

# FIG.1

# FIG.2

# FIG.3

# FIG.4

# FIG.5

203

71
1
21 } 103
3
9
6
51
22 } 102
4
72

# FIG.6

204

71
1
21 } 101
3
9
6
51
22 } 102
4
72

# FIG.7

205

71
1
21  101
3
9
6
51
22  102
4

# FIG.8

206

71
1
21  101
3
9
6
51  102
4
72

# FIG.9

71          71
3
21
1

EP 1 691 442 A1

FIG.10

FIG.11

FIG.12

FIG.13

FIG.14

25

**FIG.15**

**FIG.16**

**FIG.17**

**FIG.18**

**FIG.19**

**FIG.20**

**FIG.21**

72　　　72　　　51
222 ⎫
⎬ 22
221 ⎭
4
82　　　82

**FIG.22**

81　　　81
51
22
4
72　　　72

**FIG.23**

81　　　81
51
22
4
72　82　　72　82

**FIG.24**

81　　　81
51
22
4
72　　　72

# FIG.25

207

71

1
21 } 103
52

9

6

3
22 } 104
4

72

# FIG.26

208

1
21 } 103
52

9

6

3
22 } 104
4

72

## INTERNATIONAL SEARCH REPORT

| | International application No. |
|---|---|
| | PCT/JP2004/014585 |

**A. CLASSIFICATION OF SUBJECT MATTER**
    Int.Cl⁷ H01M14/00, H01L31/04

According to International Patent Classification (IPC) or to both national classification and IPC

**B. FIELDS SEARCHED**

Minimum documentation searched (classification system followed by classification symbols)
    Int.Cl⁷ H01M14/00, H01L31/04

Documentation searched other than minimum documentation to the extent that such documents are included in the fields searched
    Jitsuyo Shinan Koho        1926-1996    Toroku Jitsuyo Shinan Koho    1994-2004
    Kokai Jitsuyo Shinan Koho  1971-2004    Jitsuyo Shinan Toroku Koho    1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-8740 A (Yamaha Corp.), 11 January, 2002 (11.01.02), Claims 1 to 4; Par. Nos. [0017] to [0019]; examples (Family: none) | 1-18 |
| Y | JP 2001-93590 A (Canon Inc.), 06 April, 2001 (06.04.01), Claims 1 to 19; Par. No. [0045]; examples & EP 1087446 A2 & US 6649824 B1 | 1-18 |
| Y | JP 2002-94096 A (Canon Inc.), 29 March, 2002 (29.03.02), Claims 1 to 9; Par. No. [0046]; examples (Family: none) | 1-18 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 28 December, 2004 (28.12.04) | Date of mailing of the international search report 18 January, 2005 (18.01.05) |
|---|---|
| Name and mailing address of the ISA/ Japanese Patent Office | Authorized officer |
| Facsimile No. | Telephone No. |

Form PCT/ISA/210 (second sheet) (January 2004)

29

**INTERNATIONAL SEARCH REPORT**

| International application No. |
|---|
| PCT/JP2004/014585 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2002-313443 A  (Aisin Seiki Co., Ltd.),<br>25 October, 2002 (25.10.02),<br>Par. No. [0020]; examples<br>(Family: none) | 1-18 |
| Y | JP 2003-123863 A  (Mitsui Chemicals, Inc.),<br>25 April, 2003 (25.04.03),<br>Par. Nos. [0061] to [0063]<br>(Family: none) | 1-18 |

Form PCT/ISA/210 (continuation of second sheet) (January 2004)